# EUROPEAN PATENT APPLICATION

(11) **EP 2 963 097 A1**
(43) Date of publication of application: **06.01.2016**
(21) Application number: 14756347.2
(22) Date of filing: 26.02.2014
(51) Int. Cl.: C10L 1/04, C10L 1/18, F02D 21/02

(54) **FUEL OIL**

(30) Priority: 01.03.2013 JP 2013041112; 01.03.2013 JP 2013041119; 01.03.2013 JP 2013041043; 01.03.2013 JP 2013041042; 01.03.2013 JP 2013041041; 01.03.2013 JP 2013041137; 01.03.2013 JP 2013041135
(71) Applicant: TonenGeneral Sekiyu Kabushiki Kaisha, Tokyo 108-8005 (JP)
(72) Inventor: KOSEKI Keiichi, Kawasaki-shi Kanagawa 210-9526 (JP); NAIKI Taketora, Kawasaki-shi Kanagawa 210-9526 (JP)
(74) Representative: Hesselink, Dinah Elisabeth
(86) International application number: PCT/JP2014/054711
(87) International publication number: WO 2014/133012

(57) **Abstract**

amount of olefinic hydrocarbons is 35% by volume or less relative to the total volume of the hydrocarbon oil and an amount of aromatic hydrocarbons is 20 to 70% by volume relative to the total volume of the hydrocarbon oil; and the fuel oil has an initial boiling point of 24 to 80 degrees C, a 10% by volume distillation temperature of 40 to 90 degrees C, a 90% by volume distillation temperature of 170 to 220 degrees C and a final boiling point of 210 to 280 degrees C;
(4) the fuel oil comprises 60% by volume or more of a hydrocarbon oil, wherein an amount of saturated hydrocarbons is 30% by volume or more relative to the total volume of the hydrocarbon oil, an amount of olefinic hydrocarbons is 10% by volume or less relative to the total volume of the hydrocarbon oil, an amount of aromatic hydrocarbons is 65% by volume or less relative to the total volume of the hydrocarbon oil and an amount of naphthenic hydrocarbons is 45% by volume or less relative to the total volume of the hydrocarbon oil; and the fuel oil has an initial boiling point of 100 degrees C or higher;
(5) the fuel oil comprises 60% by volume or more of a hydrocarbon oil, wherein an amount of saturated hydrocarbons is 35% by volume or more relative to the total volume of the hydrocarbon oil, an amount of olefinic hydrocarbons is 10% by volume or less relative to the total volume of the hydrocarbon oil, an amount of aromatic hydrocarbons is 65% by volume or less relative to the total volume of the hydrocarbon oil, an amount of monocyclic aromatic hydrocarbons is 45% by volume or less relative to the total volume of the hydrocarbon oil, an amount of bicyclic aromatic hydrocarbons is 25% by volume or less relative to the total volume of the hydrocarbon oil and an amount of tri- or more cyclic aromatic hydrocarbons is 20% by volume or less relative to the total volume of the hydrocarbon oil; and the fuel oil has an initial boiling point of 130 degrees C or higher;
(6) the fuel oil has an initial boiling point of 22 to 80 degrees C, a 10% by volume distillation temperature of 40 to 100 degrees C, a 90% by volume distillation temperature of 220 to 400 degrees C, a 95% by volume distillation temperature of 230 to 440 degrees C and a final boiling point of 260 to 470 degrees C; and
(7) the fuel oil comprises a gasoline base material having a Research Octane Number of 96.0 or less, and a base material comprising 10% by volume or more of polycyclic aromatic hydrocarbons.

## Description

### FIELD OF THE INVENTION

The present invention relates to a fuel oil which is useful in an internal-combustion engine which supplies power by combusting a fuel oil, to an internal-combustion engine in which the fuel oil is used and to a diesel locomotive equipped with the engine in which the fuel oil is used.

### BACKGROUND OF THE INVENTION

In internal-combustion engines, in particular, automotive engines, which supply power by combusting a fuel oil such as gasoline, the fuel oil is mixed with air and then combusted. Air comprises nitrogen molecules in an amount of 78.0% by volume. During the combustion, the nitrogen molecules are converted into nitrogen oxides (NOX) such as nitric oxide, nitrogen dioxide and its dimer, and dinitrogen trioxide, which nitrogen oxides are emitted in a significant and problemic amount. Further, nitrogen in air decreases activity of oxygen in the combustion and, as a result, some hydrocarbons are unburned in a combustion chamber. The unburned hydrocarbons are emitted as exhaust gas. In order to reduce the amounts of NOX and total hydrocarbons (THC), three-way catalysts and NOX storage-reduction catalysts have been used.

The three-way catalysts need that the amounts of a fuel oil and air meet a theoretical air-fuel ratio (stoichiometric ratio) and strict temperature control in order to sufficiently exhibit its effects. Further, the catalysts need expensive noble metals such as platinum and rhodium.

An engine which supplies power by combusting hydrogen as a fuel is also known (see the following Patent Literatures 1 and 2). In this engine, hydrogen is combusted with oxygen in the presence of working gas, argon. The engine has a very high thermal efficiency. No nitrogen is used in the engine, either. Therefore, the engine does not emit NOX. However, hydrogen has a high risk of explosion and, therefore, the engine must be carefully handled. Therefore, the engine is not easily operated.

### PRIOR ART LITERATURES

### PATENT LITERATURES

Patent Literature 1: Japanese Patent Application Laid-Open No. Hei 11-93681/1999
Patent Literature 2: Japanese Patent Application Laid-Open No. 2009-68392

### SUMMARY OF THE INVENTION

The present inventors previously found that amounts of exhaust gas such as NOX and THC are reduced by substituting gas comprising 65% by volume or more of oxygen for air which has conventionally been used in the combustion of a fuel oil (JP Application No. 2012-286942). An object of the present invention is to provide a fuel oil which generates a reduced amount of exhaust gas such as NOX and THC and is useful in an internal-combustion engine which supplies power by combustion.

The present inventors have found that the aforesaid object is achieved by subjecting to combustion a fuel oil having a specific composition and/or specific distillation characteristics, and gas comprising 65% by volume or more of oxygen.

Thus, the present invention provides a fuel oil for an internal-combustion engine comprising a combustion chamber which is adapted so that the fuel oil and gas comprising 65% by volume or more of oxygen are subjected to combustion in the combustion chamber, wherein the fuel oil meets at least one of the following requirements (1) to (7):
(1) the fuel oil comprises 60% by volume or more of a hydrocarbon oil, wherein an amount of saturated hydrocarbons is 30% by volume or more relative to the total volume of the hydrocarbon oil, an amount of olefinic hydrocarbons is 35% by volume or less relative to the total volume of the hydrocarbon oil and an amount of aromatic hydrocarbons is 50% by volume or less relative to the total volume of the hydrocarbon oil;
(2) the fuel oil comprises 60% by volume or more of a hydrocarbon oil, wherein an amount of saturated hydrocarbons is 30% by volume or more relative to the total volume of the hydrocarbon oil, an amount of olefinic hydrocarbons is 40% by volume or less relative to the total volume of the hydrocarbon oil and an amount of aromatic hydrocarbons is 50% by volume or less relative to the total volume of the hydrocarbon oil; and the fuel oil has an initial boiling point of 21 to 80 degrees C, a 10% by volume distillation temperature of 35 to 90 degrees C, a 90% by volume distillation temperature of 100 to 190 degrees C and a final boiling point of 130 to 230 degrees C;
(3) the fuel oil comprises 60% by volume or more of a hydrocarbon oil, wherein an amount of saturated hydrocarbons is 15% by volume or more relative to the total volume of the hydrocarbon oil, an amount of olefinic hydrocarbons is 35% by volume or less relative to the total volume of the hydrocarbon oil and an amount of aromatic hydrocarbons is 20 to 70% by volume relative to the total volume of the hydrocarbon oil; and the fuel oil has an initial boiling point of 24 to 80 degrees C, a 10% by volume distillation temperature of 40 to 90 degrees C, a 90% by volume distillation temperature of 170 to 220 degrees C and a final boiling point of 210 to 280 degrees C;
(4) the fuel oil comprises 60% by volume or more of a hydrocarbon oil, wherein an amount of saturated hydrocarbons is 30% by volume or more relative to the total volume of the hydrocarbon oil, an amount of olefinic hydrocarbons is 10% by volume or less relative to the total volume of the hydrocarbon oil, an amount of aromatic hydrocarbons is 65% by volume or less relative to the total volume of the hydrocarbon oil and an amount of naphthenic hydrocarbons is 45% by volume or less relative to the total volume of the hydrocarbon oil; and the fuel oil has an initial boiling point of 100 degrees C or higher;
(5) the fuel oil comprises 60% by volume or more of a hydrocarbon oil, wherein an amount of saturated hydrocarbons is 35% by volume or more relative to the total volume of the hydrocarbon oil, an amount of olefinic hydrocarbons is 10% by volume or less relative to the total volume of the hydrocarbon oil, an amount of aromatic hydrocarbons is 65% by volume or less relative to the total volume of the hydrocarbon oil, an amount of monocyclic aromatic hydrocarbons is 45% by volume or less relative to the total volume of the hydrocarbon oil, an amount of bicyclic aromatic hydrocarbons is 25% by volume or less relative to the total volume of the hydrocarbon oil and an amount of tri- or more cyclic aromatic hydrocarbons is 20% by volume or less relative to the total volume of the hydrocarbon oil; and the fuel oil has an initial boiling point of 130 degrees C or higher;
(6) the fuel oil has an initial boiling point of 22 to 80 degrees C, a 10% by volume distillation temperature of 40 to 100 degrees C, a 90% by volume distillation temperature of 220 to 400 degrees C, a 95% by volume distillation temperature of 230 to 440 degrees C and a final boiling point of 260 to 470 degrees C; and
(7) the fuel oil comprises a gasoline base material having a Research Octane Number of 96.0 or less, and a base material comprising 10% by volume or more of polycyclic aromatic hydrocarbons.

This invention also provides an internal-combustion engine comprising a combustion chamber which is adapted so that a fuel oil and gas comprising 65% by volume or more of oxygen are subjected to combustion in the combustion chamber, wherein the fuel oil is the present fuel oil described above.

This invention also provides a diesel locomotive equipped with an internal-combustion engine comprising a combustion chamber which is adapted so that a fuel oil and gas comprising 65% by volume or more of oxygen are subjectedto combustion in the combustion chamber, wherein the fuel oil is the present fuel oil described above.

### EFFECTS OF THE INVENTION

When the present fuel oil is subjected to combustion with gas comprising 65% by volume or more of oxygen, a reduced amount of exhaust gas such as NOX and THC is emitted. Therefore, the internal-combustion engine which supplies power by such combustion does not need to be provided with a three-way catalyst or an NOX storage-reduction catalyst. Further, the internal-combustion engine in which the present fuel oil is used is suitably used in vehicles such as diesel locomotives and automobiles.

### BRIEF EXPLANATION OF THE DRWAING

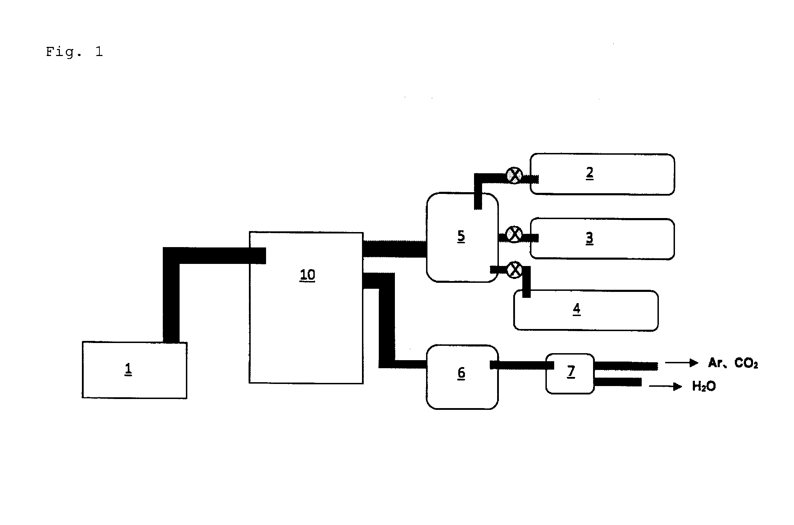

[Fig. 1] Fig. 1 is a flow chart of the internal-combustion engine system used in the Examples.

### EMBODIMENTS OF THE INVENTION

The present fuel oil is used in an internal-combustion engine comprising a combustion chamber which is adapted so that the fuel oil is subjected to combustion with gas comprising 65% by volume or more of oxygen in the combustion chamber.

Fig. 1 shows one example of a system comprising the internal-combustion engine. The present internal-combustion engine 10 comprises a combustion chamber. In the combustion chamber, a fuel oil is fed from fuel tank 1 and combusted with gas fed via preserver 5. The gas comprises 65% by volume or more of oxygen when the combustion is in a steady condition. The gas preferably comprises no nitrogen from a standpoint of decreasing the amount of NOX.

### Fuel oil (1)

A first fuel oil for the aforesaid internal-combustion engine (hereinafter referred to as fuel oil (1)) comprises 60% by volume or more relative to a total volume of the fuel oil, preferably 80% by volume or more, more preferably 90% by volume or more, still more preferably 93 to 100% by volume, of a hydrocarbon oil, wherein an amount of saturated hydrocarbons is 30% by volume or more relative to the total volume of the hydrocarbon oil, an amount of olefinic hydrocarbons is 35% by volume or less relative to the total volume of the hydrocarbon oil and an amount of aromatic hydrocarbons is 50% by volume or less relative to the total volume of the hydrocarbon oil.

The amount of the saturated hydrocarbons is 30% by volume or more, preferably 40% by volume or more, more preferably 50% by volume or more, still more preferably 60% by volume or more, still more preferably 70% by volume or more, still more preferably 80% by volume or more, still more preferably 90% by volume or more, most preferably 95% by volume or more, in view of decreasing an amount of THC in exhaust gas. There is no particular upper limit for the amount, and it is preferably 100% by volume.

The amount of the olefinic hydrocarbons is 35% by volume or less, preferably 30% by volume or less, more preferably 25% by volume or less, in view of good combustibility. There is no particular lower limit for the amount, and it is preferably 0% by volume.

The amount of the aromatic hydrocarbons is 50% by volume or less, preferably 45% by volume or less, more preferably 40% by volume or less, still more preferably 35% by volume or less, still more preferably 30% by volume or less, still more preferably 20% by volume or less, still more preferably 15% by volume or less, most preferably 10% by volume or less, in view of good combustibility and decreasing an amount of THC in exhaust gas. There is no particular lower limit for the amount, and it is preferably 0% by volume.

The amounts of the saturated hydrocarbons, the olefinic hydrocarbons and the aromatic hydrocarbons are each determined by a fluorescent indicator adsorption method according to the Japanese Industrial Standards (JIS) K 2536, "Petroleum products-Determination of hydrocarbons types".

An amount of hydrocarbons having a specific number of carbon atoms in the present fuel oil (1) is not limited. A preferred amount is as follows.

An amount of hydrocarbons having four carbon atoms is preferably 15% by volume or less, more preferably 10% by volume or less, still more preferably 5% by volume or less, relative to the total volume of the hydrocarbon oil, in view of decreasing an amount of evaporative emission to thereby decrease an amount of THC in exhaust gas, and in view of decreasing inflammability for easy handling. There is no particular lower limit for the amount, and it is preferably 0% by volume.

A total amount of hydrocarbons having 5 to 8 carbon atoms is preferably 50 to 100% by volume, more preferably 55 to 100% by volume, still more preferably 60 to 99.7% by volume, still more preferably 65 to 99. 5% by volume, relative to the total volume of the hydrocarbon oil, in view of combustibility.

A total amount of hydrocarbons having 10 or more carbon atoms is preferably 20% by volume or less, more preferably 10% by volume or less, most preferably 5% by volume or less, relative to the total volume of the hydrocarbon oil. There is no particular lower limit for the amount, and it is preferably 0% by volume.

For the hydrocarbons having 5 to 8 carbon atoms, an amount of hydrocarbons having five carbon atoms, an amount of hydrocarbons having six carbon atoms and a total amount of hydrocarbons having seven and eight carbon atoms are not limited. These amounts are preferably as follows.

The amount of hydrocarbons having five carbon atoms is preferably 50% by volume or less, more preferably 48% by volume or less, still more preferably 45% by volume or less, relative to the total volume of the hydrocarbon oil, in view of combustibility. There is no particular lower limit for the amount, and it is preferably 0% by volume. The amount of hydrocarbons having six carbon atoms is preferably 60% by volume or less, more preferably 58% by volume or less, and preferably 20% by volume or more, more preferably 25% by volume or more, most preferably 30% by volume or more, relative to the total volume of the hydrocarbon oil, in view of combustibility. The total amount of hydrocarbons having seven and eight carbon atoms is preferably 2 to 85% by volume, more preferably 3 to 82% by volume, relative to the total volume of the hydrocarbon oil.

The amounts of the hydrocarbon having four carbon atoms (C4), the hydrocarbons having five carbon atoms (C5), the hydrocarbons having six carbon atoms (C6), the hydrocarbons having seven carbon atoms (C7) and the hydrocarbons having eight carbon atoms (C8), an amount of hydrocarbons having nine carbon atoms (C9), and the total amount of the hydrocarbons having 10 or more carbon atoms (C10 or more) are each determined by gas chromatography using a methyl silicone capillary column, helium or nitrogen as carrier gas, and a flame ionization detector (FID) in the conditions of a column length of 25 to 50m, a flow rate of the carrier gas of 0.5 to 1.5 ml/min., a split ratio of 1:50 to 1:250, aninlet temperature of 150 to 250 degrees C, an initial column temperature of -10 to 10 degrees C, a final column temperature of 150 to 250 degrees C and a detector temperature of 150 to 250 degrees C.

An amount of paraffinic hydrocarbons is preferably 60% by volume or more, more preferably 65% by volume or more, still more preferably 70% by volume or more, still more preferably 75% by volume or more, still more preferably 80% by volume or more, still more preferably 85% by volume or more, still more preferably 90% by volume or more, most preferably 95% by volume or more, relative to the total volume of the saturated hydrocarbons, but not limited thereto. There is no particular upper limit for the amount, and it is preferably 100% by volume.

An amount of branched paraffinic hydrocarbons is not limited. The amount is preferably 30% by volume or more, more preferably 50% by volume or more, most preferably 70% by volume or more, relative to the total volume of the paraffinic hydrocarbons, in view of decreasing an amount of THC in exhaust gas. There is no particular upper limit for the amount, and it is preferably 100% by volume.

The amounts of the paraffinic hydrocarbons and the branched paraffinic hydrocarbons are each determined using the aforesaid gas chromatography.

Distillation characteristics of the present fuel oil (1) are not limited. The following two sets (A) and (B) of distillation characteristics are preferred.
(A) An initial boiling point is 24 to 80 degrees C, a 10% by volume distillation temperature is 35 to 100 degrees C, a 90% by volume distillation temperature is 100 to 180 degrees C and a final boiling point is 120 to 210 degrees C.
(B) An initial boiling point is 24 to 50 degrees C, a 10% by volume distillation temperature is 35 to 75 degrees C, a 90% by volume distillation temperature is 50 to 100 degrees C and a final boiling point is 65 to 100 degrees C.

Preferred embodiments of set (A) are set (A1) and set (A2) are as follows.
(A1) An initial boiling point is 24 to 50 degrees C, a 10% by volume distillation temperature is 35 to 75 degrees C, a 90% by volume distillation temperature is 100 to 180 degrees C and a final boiling point is 130 to 210 degrees C.
(A2) An initial boiling point is 50 to 80 degrees C, a 10% by volume distillation temperature is 65 to 100 degrees C, a 90% by volume distillation temperature is 100 to 180 degrees C and a final boiling point is 120 to 210 degrees C.

The preferred ranges for the initial boiling point (IBP) and the 10% by volume distillation temperature (T₁₀) are set in view of decreasing inflammability and decreasing the amount of evaporative emission (THC). The preferred ranges for the 90% by volume distillation temperature (T₉₀) and the final boiling point (EP) are set in view of decreasing an amount of THC in exhaust gas.

The initial boiling point (IBP), the 10% by volume distillation temperature (T₁₀), the 90% by volume distillation temperature (T₉₀) and the final boiling point (EP) are each determined according to JIS K 2254, "Petroleum products-Determination of distillation characteristics". The same applies also to the 30% by volume distillation temperature (T₃₀), the 50% by volume distillation temperature (T₅₀) and the 70% by volume distillation temperature (T₇₀) which are described below.

A sulfur content in the present fuel oil (1) is not limited. This is because the present fuel oil (1) is to be used in the aforesaid internal-combustion engine and, as described above, the engine emits a reduced amount of exhaust gas such as NOX and THC and, therefore, does not need to be provided with a catalyst such as a three-way catalyst. In prior internal-combustion engines, a catalyst such as a three-way catalyst is used in order to decrease the amount of exhaust gas such as NOX and THC. Such a catalyst is deactivated when a fuel oil contains a large amount of sulfur. On the other hand, such a catalyst is unnecessary for the present fuel oil (1) and, therefore, a sulfur content is not limited. The sulfur content is preferably 100ppm by mass or less, more preferably 50ppm by mass or less, still more preferably 30ppm by mass or less, still more preferably 10ppm by mass or less, still more preferably 1ppm by mass or less, most preferably 0.1ppm by mass or less, relative to a total mass of the fuel oil, in view of decreasing deterioration of the internal-combustion engine system. There is no particular lower limit for the content, and it is preferably 0ppm by mass.

The sulfur content is determined according to JIS K 2541, "Crude oil and petroleum products-Determination of sulfur content" for 1ppm by mass or more, and according to ASTM D4045-96 "Standard Test Method for Sulfur in Petroleum Products by Hydrogenolysis and Rateometric Colorimetry" for less than 1ppm by mass.

A method for producing the present fuel oil (1) is not particularly limited. The present fuel oil (1) may be produced with, for example, one or more of hydrocarbon oils such as light naphtha obtained by subjecting crude oil to atmospheric distillation, heavy naphtha obtained by subjecting crude oil to atmospheric distillation, desulfurized full range naphtha obtained by desulfurizing naphtha fractions which are obtained by subj ecting crude oil to distillation, desulfurized light naphtha obtained by desulfurizing light naphtha, desulfurized heavy naphtha obtained by desulfurizing heavy naphtha, isomerate gasoline obtained by converting light naphtha to isoparaffin in an isomerization apparatus, alkylates obtained by an addition reaction of lower olefins with hydrocarbons such as isobutane (alkylation), desulfurized alkylates obtained by desulfurizing alkylates, low sulfur content alkylates obtained from desulfurized hydrocarbons, such as desulfurized isobutane, and desulfurized lower olefins, reformed gasoline obtained by catalytic reforming, raffinate which is a residue obtained by extracting aromatics from reformed gasoline with sulfolane (sulfolane raffinate), light fractions of reformed gasoline (light reformed gasoline), middle and heavy fractions of reformed gasoline (middle and heavy reformed gasoline), heavy fractions of reformed gasoline (heavy reformed gasoline), cracked gasoline obtained by catalytic cracking or hydrocracking, light fractions of cracked gasoline (light cracked gasoline), heavy fractions of cracked gasoline (heavy cracked gasoline), desulfurized cracked gasoline obtained by desulfurizing cracked gasoline, desulfurized light cracked gasoline obtained by desulfurizing light fractions of cracked gasoline, desulfurized heavy cracked gasoline obtained by desulfurizing heavy fractions of cracked gasoline, light fractions of GTL (Gas to Liquids) which is obtained by converting natural gas into carbon monoxide and hydrogen, followed by Fischer-Tropsch synthesis (GTL naphtha), LPG (liquefied petroleum gas), and desulfurized LPG obtained by desulfurizing LPG. These hydrocarbon oils may be, alone or in a mixture of two or more of them, desulfurized by hydrogenation or adsorption. Of these hydrocarbon oils, the following is preferred as a base material for the present fuel oil (1): light naphtha, desulfurized full range naphtha obtained by desulfurizing naphtha fractions which are obtained by subjecting crude oil to distillation, desulfurized light naphtha, isomerate gasoline, desulfurized alkylates obtained by desulfurizing alkylates, low sulfur content alkylates obtained from desulfurized hydrocarbons, such as desulfurized isobutane, and desulfurized lower olefins, desulfurized light cracked gasoline obtained by desulfurizing light fractions of cracked gasoline, light fractions of GTL and desulfurized LPG obtained by desulfurizing LPG.

### Fuel oil (2)

A second fuel oil for the aforesaid internal-combustion engine (hereinafter referred to as fuel oil (2)) comprises 60% by volume or more relative to a total volume of the fuel oil, preferably 80% by volume or more, more preferably 90% by volume or more, still more preferably 93 to 100% by volume, of a hydrocarbon oil, wherein an amount of saturated hydrocarbons is 30% by volume or more relative to the total volume of the hydrocarbon oil, an amount of olefinic hydrocarbons is 40% by volume or less relative to the total volume of the hydrocarbon oil and an amount of aromatic hydrocarbons is 50% by volume or less relative to the total volume of the hydrocarbon oil.

The amount of the saturated hydrocarbons is 30% by volume or more, preferably 40% by volume or more, more preferably 50% by volume or more, in view of securing good start of combustion. There is no particular upper limit for the amount, and it is preferably 100% by volume, more preferably 85% by volume.

The amount of the olefinic hydrocarbons is 40% by volume or less, preferably 35% by volume or less, more preferably 30% by volume or less, in view of flame propagation properties and oxidation stability. A lower limit for the amount is 0% by volume.

The amount of the aromatic hydrocarbons is 50% by volume or less, preferably less than 40% by volume, more preferably 35% by volume or less, still more preferably 30% by volume or less, in view of combustion efficiency. There is no particular lower limit for the amount, and it is preferably 15% by volume.

The amounts of the saturated hydrocarbons, the olefinic hydrocarbons and the aromatic hydrocarbons are each determined by a fluorescent indicator adsorption method according to JIS K 2536, "Petroleum products-Determination of hydrocarbons types".

An amount of paraffinic hydrocarbons is not limited. The amount is preferably 60% by volume or more, more preferably 65% by volume or more, still more preferably 70% by volume or more, still more preferably 75% by volume or more, still more preferably 80% by volume or more, still more preferably 85% by volume or more, still more preferably 90% by volume or more, most preferably 95% by volume or more, relative to the total volume of the saturated hydrocarbons. There is no particular upper limit for the amount, and it is preferably 100% by volume.

An amount of branched paraffinic hydrocarbons is not limited. The amount is preferably 30% by volume or more, more preferably 50% by volume or more, most preferably 70% by volume or more, relative to the total volume of the paraffinic hydrocarbons, in view of decreasing an amount of THC in exhaust gas. There is no particular upper limit for the amount, and it is preferably 100% by volume.

The amounts of the paraffinic hydrocarbons and the branched paraffinic hydrocarbons are each determined by gas chromatography using a methyl silicone capillary column, helium or nitrogen as carrier gas, and a flame ionization detector (FID) in the conditions of a column length of 25 to 50m, a flow rate of the carrier gas of 0.5 to 1.5 ml/min., a split ratio of 1:50 to 1:250, an inlet temperature of 150 to 250 degrees C, an initial column temperature of -10 to 10 degrees C, a final column temperature of 150 to 250 degrees C and a detector temperature of 150 to 250 degrees C.

The present fuel oil (2) has an initial boiling point (IBP) of 21 to 80 degrees C, a 10% by volume distillation temperature (T₁₀) of 35 to 90 degrees C, a 90% by volume distillation temperature (T₉₀) of 100 to 190 degrees C and a final boiling point (EP) of 130 to 230 degrees C.

The initial boiling point (IBP) is 21 to 80 degrees C, preferably 27 degrees C or higher, more preferably 30 degrees C or higher. The 10% by volume distillation temperature (T₁₀) is 35 to 90 degrees C, preferably 40 degrees C or higher, more preferably 45 degrees C or higher. The 90% by volume distillation temperature (T₉₀) is 100 to 190 degrees C, preferably 170 degrees C or lower. The final boiling point (EP) is 130 to 230 degrees C, preferably 200 degrees C or lower.

If the initial boiling point (IBP) is below the lower limit, inflammablity is high and evaporative emission (THC) generates easily and, therefore, handling is difficult. Similarly, if the 10% by volume distillation temperature (T₁₀) is below the lower limit, inflammablity is high and evaporative emission (THC) generates easily and, therefore, handling is difficult. The upper limits of the 90% by volume distillation temperature (T₉₀) and the final boiling point (EP) are set in view of decreasing an amount of THC in exhaust gas.

The initial boiling point (IBP), the 10% by volume distillation temperature (T₁₀), the 90% by volume distillation temperature (T₉₀) and the final boiling point (FBT) are each determined according to JIS K 2254, "Petroleum products-Determination of distillation characteristics". The same applies also to a 30% by volume distillation temperature (T₃₀), a 50% by volume distillation temperature (T₅₀) and a 70% by volume distillation temperature (T₇₀) which are described below.

A Reid vapor pressure (RVP) of the present fuel oil (2) is not limited. The Reid vapor pressure (RVP) is preferably 10 to 100kPa, more preferably 20 to 90kPa, still more preferably 40 to 75kPa, most preferably 40 to 60kPa, in view of easy handling which depends on a flash point and decreasing an amount of evaporative emission. The Reid vapor pressure (RVP) is determined according to JIS K 2258, "Crude oil and fuel oil-Determination of vapor pressure (Reid method)".

A Research Octane Number (RON) of the present fuel oil (2) is not limited. The Research Octane Number (RON) is preferably 54.0 or higher, more preferably 89.0 or higher, in view of good fuel efficiency of vehicles and decreasing an amount of THC in exhaust gas. The Research Octane Number (RON) is determined according to JIS K 2280, "Determination of octane number and cetane number".

A sulfur content of the present fuel oil (2) is not limited. This is because the present fuel oil (2) is to be used in the aforesaid internal-combustion engine and, as described above, the engine emits a reduced amount of exhaust gas such as NOX and THC and, therefore, does not need to be provided with a catalyst such as a three-way catalyst. In prior internal-combustion engines, a catalyst such as a three-way catalyst is used in order to decrease the amount of exhaust gas such as NOX and THC. Such a catalyst is deactivated when a fuel oil contains a large amount of sulfur. On the other hand, such a catalyst is unnecessary for the present fuel oil (2) and, therefore, a sulfur content is not limited. The sulfur content is preferably 100ppm by mass or less, more preferably 50ppm by mass or less, still more preferably 30ppm by mass or less, still more preferably 10ppm by mass or less, still more preferably 1ppm by mass or less, most preferably 0.1ppm by mass or less, relative to a total mass of the fuel oil, in view of decreasing deterioration of the internal-combustion engine system. There is no particular lower limit for the content, and it is preferably 0ppm by mass.

The sulfur content is determined according to JIS K 2541, "Crude oil and petroleum products-Determination of sulfur content" for 1ppm by mass or more, and according to ASTM D4045-96 "Standard Test Method for Sulfur in Petroleum Products by Hydrogenolysis and Rateometric Colorimetry" for less than 1ppm by mass.

A benzene content of the present fuel oil (2) is not limited, because the internal-combustion engine has high combustion efficiency as described below. The benzene content is preferably 5% by volume or less, more preferably 1% by volume or less, in view of decreasing an amount of THC in exhaust gas. The benzene content is determined by gas chromatography according to the Japan Petroleum Institute (JPI)-5S-33-90.

A method for producing the present fuel oil (2) is not particularly limited. The present fuel oil (2) may be produced with, for example, one or more of hydrocarbon oils such as light naphtha obtained by subjecting crude oil to atmospheric distillation, heavy naphtha obtained by subjecting crude oil to atmospheric distillation, desulfurized full range naphtha obtained by desulfurizing naphtha fractions which are obtained by subj ecting crude oil to distillation, desulfurized light naphtha obtained by desulfurizing light naphtha, desulfurized heavy naphtha obtained by desulfurizing heavy naphtha, isomerate gasoline obtained by converting light naphtha to isoparaffin in an isomerization apparatus, alkylates obtained by an addition reaction of lower olefins with hydrocarbons such as isobutane (alkylation), desulfurized alkylates obtained by desulfurizing alkylates, low sulfur content alkylates obtained from desulfurized hydrocarbons, such as desulfurized isobutane, and desulfurized lower olefins , reformed gasoline obtained by catalytic reforming, raffinate which is a residue obtained by extracting aromatics from reformed gasoline with sulfolane (sulfolane raffinate), light fractions of reformed gasoline (light reformed gasoline), middle and heavy fractions of reformed gasoline (middle and heavy reformed gasoline), heavy fractions of reformed gasoline (heavy reformed gasoline), cracked gasoline obtained by catalytic cracking or hydrocracking, light fractions of cracked gasoline (light cracked gasoline), heavy fractions of cracked gasoline (heavy cracked gasoline), desulfurized cracked gasoline obtained by desulfurizing cracked gasoline, desulfurized light cracked gasoline obtained by desulfurizing light fractions of cracked gasoline, desulfurized heavy cracked gasoline obtained by desulfurizing heavy fractions of cracked gasoline, light fractions of GTL (Gas to Liquids) which is obtained by converting natural gas into carbon monoxide and hydrogen, followed by Fischer-Tropsch synthesis (GTL naphtha), LPG (liquefied petroleum gas), and desulfurized LPG obtained by desulfurizing LPG. These hydrocarbon oils may be, alone or in a mixture of two or more of them, desulfurized by hydrogenation or adsorption. Of these hydrocarbon oils, the following is preferred as a base material for the present fuel oil (2): light naphtha, desulfurized full range naphtha obtained by desulfurizing naphtha fractions which are obtained by subjecting crude oil to distillation, desulfurized light naphtha, isomerate gasoline, desulfurized alkylates obtained by desulfurizing alkylates, low sulfur content alkylates obtained from desulfurized hydrocarbons, such as desulfurized isobutane, and desulfurized lower olefins, desulfurized light cracked gasoline obtained by desulfurizing light fractions of cracked gasoline, light fractions of GTL and desulfurized LPG obtained by desulfurizing LPG.

### Fuel oil (3)

A third fuel oil for the aforesaid internal-combustion engine (hereinafter referred to as fuel oil (3)) comprises 60% by volume or more, relative to a total volume of the fuel oil, of a hydrocarbon oil, wherein an amount of saturated hydrocarbons is 15% by volume or more relative to the total volume of the hydrocarbon oil, an amount of olefinic hydrocarbons is 35% by volume or less relative to the total volume of the hydrocarbon oil and an amount of aromatic hydrocarbons is 20 to 70% by volume relative to the total volume of the hydrocarbon oil.

The amount of the saturated hydrocarbons is 15% by volume or more, preferably 20% by volume or more, more preferably 25% by volume or more, in view of securing good start of combustion. There is no particular upper limit for the amount, and it is preferably 80% by volume, more preferably 75% by volume.

The amount of the olefinic hydrocarbons is 35% by volume or less, preferably 30% by volume or less, more preferably 25% by volume or less, in view of flame propagation properties and oxidation stability. There is no particular lower limit for the amount, and it may be 0% by volume.

The amount of the aromatic hydrocarbons is 20 to 70% by volume, preferably 25 to 70% by volume, more preferably 40 to 70% by volume, still more preferably 30 to 65% by volume, in view of combustion efficiency.

An amount of aromatic hydrocarbons having seven carbon atoms (C7 aromatics) is preferably 3 to 50% by volume, more preferably 3 to 35% by volume, still more preferably 5 to 30% by volume, relative to the total volume of the aromatic hydrocarbons, but not limited thereto. An amount of aromatic hydrocarbons having nine carbon atoms (C9 aromatics) is preferably 3 to 50% by volume, more preferably 3 to 35% by volume, still more preferably 5 to 30% by volume, relative to the total volume of the aromatic hydrocarbons, but not limited thereto.

The amounts of the saturated hydrocarbons, the olefinic hydrocarbons and the aromatic hydrocarbons are each determined by a fluorescent indicator adsorption method according to JIS K 2536, "Petroleum products-Determination of hydrocarbons types". The amounts of C7 aromatics and C9 aromatics are each determined by gas chromatography according to JPI-5S-33-90.

An amount of paraffinic hydrocarbons is not limited. The amount is preferably 60% by volume or more, more preferably 65% by volume or more, still more preferably 70% by volume or more, still more preferably 75% by volume or more, still more preferably 80% by volume or more, still more preferably 85% by volume or more, still more preferably 90% by volume or more, most preferably 95% by volume or more, relative to the total volume of the saturated hydrocarbons. There is no particular upper limit for the amount, and it is preferably 100% by volume.

An amount of branched paraffinic hydrocarbons is not limited. The amount is preferably 30% by volume or more, more preferably 50% by volume or more, most preferably 70% by volume or more, relative to the total volume of the paraffinic hydrocarbons, in view of decreasing an amount of THC in exhaust gas. There is no particular upper limit for the amount, and it is preferably 100% by volume.

The amounts of the paraffinic hydrocarbons and the branched paraffinic hydrocarbons are each determined by gas chromatography using a methyl silicone capillary column, helium or nitrogen as carrier gas, and a flame ionization detector (FID) in the conditions of a column length of 25 to 50m, a flow rate of the carrier gas of 0.5 to 1.5 ml/min., a split ratio of 1:50 to 1:250, an inlet temperature of 150 to 250 degrees C, an initial column temperature of -10 to 10 degrees C, a final column temperature of 150 to 250 degrees C and a detector temperature of 150 to 250 degrees C.

The present fuel oil (3) has an initial boiling point (IBP) of 24 to 80 degrees C, a 10% by volume distillation temperature (T₁₀) of 40 to 120 degrees C, a 90% by volume distillation temperature (T₉₀) of 170 to 220 degrees C and a final boiling point (EP) of 210 to 280 degrees C.

The initial boiling point (IBP) is 24 to 80 degrees C, preferably 27 degrees C or higher, more preferably 30 degrees C or higher. The 10% by volume distillation temperature (T₁₀) is 40 to 120 degrees C, preferably 45 degrees C or higher, more preferably 50 degrees C or higher. The 90% by volume distillation temperature (T₉₀) is 170 to 220 degrees C, preferably 210 degrees C or lower. The final boiling point (EP) is 210 to 280 degrees C, preferably 270 degrees C or lower.

If the initial boiling point (IBP) is below the lower limit, inflammablity is high and evaporative emission (THC) generates easily and, therefore, handling is difficult. Similarly, if the 10% by volume distillation temperature (T₁₀) is below the lower limit, inflammablity is high and evaporative emission (THC) generates easily and, therefore, handling is difficult. The upper limits of the 90% by volume distillation temperature (T₉₀) and the final boiling point (EP) are set in view of decreasing an amount of THC in exhaust gas.

The initial boiling point (IBP), the 10% by volume distillation temperature (T₁₀), the 90% by volume distillation temperature (T₉₀) and the final boiling point (EP) are each determined according to JIS K 2254, "Petroleum products-Determination of distillation characteristics". The same applies also to a 30% by volume distillation temperature (T₃₀), a 50% by volume distillation temperature (T₅₀) and a 70% by volume distillation temperature (T₇₀) which are described below.

A Reid vapor pressure (RVP) of the present fuel oil (3) is not limited. The Reid vapor pressure (RVP) is preferably 10 to 100kPa, more preferably 20 to 90kPa, still more preferably 20 to 75kPa, most preferably 20 to 60kPa, in view of easy handling which depends on a flash point and decreasing an amount of evaporative emission. The Reid vapor pressure (RVP) is determined according to JIS K 2258, "Crude oil and fuel oil-Determination of vapor pressure (Reid method)".

A Research Octane Number (RON) of the present fuel oil (3) is not limited. The Research Octane Number (RON) is preferably 89.0 or higher, more preferably 96.0 or higher, in view of good fuel efficiency of vehicles and decreasing an amount of THC in exhaust gas. The Research Octane Number (RON) is determined according to JIS K 2280, "Determination of octane number and cetane number".

A sulfur content of the present fuel oil (3) is not limited. This is because the present fuel oil (3) is to be used in the aforesaid internal-combustion engine and, as described above, the engine emits a reduced amount of exhaust gas such as NOX and THC and, therefore, does not need to be provided with a catalyst such as a three-way catalyst. In prior internal-combustion engines, a catalyst such as a three-way catalyst is used in order to decrease the amount of exhaust gas such as NOX and THC. Such a catalyst is deactivated when a fuel oil contains a large amount of sulfur. On the other hand, such a catalyst is unnecessary for the present fuel oil (3) and, therefore, a sulfur content is not limited. The sulfur content is preferably 100ppm by mass or less, more preferably 50ppm by mass or less, still more preferably 30ppm by mass or less, still more preferably 10ppm by mass or less, still more preferably 1ppm by mass or less, most preferably 0.1ppm by mass or less, relative to a total mass of the fuel oil, in view of decreasing deterioration of the internal-combustion engine system. There is no particular lower limit for the content, and it is preferably 0ppm by mass.

The sulfur content is determined according to JIS K 2541, "Crude oil and petroleum products-Determination of sulfur content" for 1ppm by mass or more, and according to ASTM D4045-96 "Standard Test Method for Sulfur in Petroleum Products by Hydrogenolysis and Rateometric Colorimetry" for less than 1ppm by mass.

A method for producing the present fuel oil (3) is not particularly limited. The present fuel oil (3) may be produced with, for example, one or more of hydrocarbon oils such as light naphtha obtained by subjecting crude oil to atmospheric distillation, heavy naphtha obtained by subjecting crude oil to atmospheric distillation, desulfurized full range naphtha obtained by desulfurizing naphtha fractions which are obtained by subjecting crude oil to distillation, desulfurized light naphtha obtained by desulfurizing light naphtha, desulfurized heavy naphtha obtained by desulfurizing heavy naphtha, isomerate gasoline obtained by converting light naphtha to isoparaffin in an isomerization apparatus, alkylates obtained by an addition reaction of lower olefins with hydrocarbons such as isobutane (alkylation), desulfurized alkylates obtained by desulfurizing alkylates, low sulfur content alkylates obtained from desulfurized hydrocarbons, such as desulfurized isobutane, and desulfurized lower olefins, reformed gasoline obtained by catalytic reforming, raffinate which is a residue obtained by extracting aromatics from reformed gasoline with sulfolane (sulfolane raffinate), light fractions of reformed gasoline (light reformed gasoline), middle and heavy fractions of reformed gasoline (middle and heavy reformed gasoline), heavy fractions of reformed gasoline (heavy reformed gasoline), cracked gasoline obtained by catalytic cracking or hydrocracking, light fractions of cracked gasoline (light cracked gasoline), heavy fractions of cracked gasoline (heavy cracked gasoline), desulfurized cracked gasoline obtained by desulfurizing cracked gasoline, desulfurized light cracked gasoline obtained by desulfurizing light fractions of cracked gasoline, desulfurized heavy cracked gasoline obtained by desulfurizing heavy fractions of cracked gasoline, light fractions of GTL (Gas to Liquids) which is obtained by converting natural gas into carbon monoxide and hydrogen, followed by Fischer-Tropsch synthesis (GTL naphtha), LPG (liquefied petroleum gas), and desulfurized LPG obtained by desulfurizing LPG. These hydrocarbon oils may be, alone or in a mixture of two or more of them, desulfurized by hydrogenation or adsorption. Of these hydrocarbon oils, the following is preferred as a base material for the present fuel oil (3): light naphtha, desulfurized full range naphtha obtained by desulfurizing naphtha fractions which are obtained by subjecting crude oil to distillation, desulfurized light naphtha, isomerate gasoline, desulfurized alkylates obtained by desulfurizing alkylates, low sulfur content alkylates obtained from desulfurized hydrocarbons, such as desulfurized isobutane, and desulfurized lower olefins, desulfurized light cracked gasoline obtained by desulfurizing light fractions of cracked gasoline, light fractions of GTL and desulfurized LPG obtained by desulfurizing LPG.

### Fuel oil (4)

A fourth fuel oil for the aforesaid internal-combustion engine (hereinafter referred to as fuel oil (4)) comprises 60% by volume or more relative to a total volume of the fuel oil, preferably 80% by volume or more, more preferably 90% by volume or more, still more preferably 93 to 100% by volume, of a hydrocarbon oil, wherein an amount of saturated hydrocarbons is 30% by volume or more relative to the total volume of the hydrocarbon oil, an amount of olefinic hydrocarbons is 10% by volume or less relative to the total volume of the hydrocarbon oil, an amount of aromatic hydrocarbons is 65% by volume or less relative to the total volume of the hydrocarbon oil, an amount of naphthenic hydrocarbons is 45% by volume or less relative to the total volume of the hydrocarbon oil; and the fuel oil has an initial boiling point of 100 degrees C or higher.

The amount of the saturated hydrocarbons is 35% by volume or more, preferably 50% by volume or more, more preferably 60% by volume or more, still more preferably 70% by volume or more, in view of securing good start of combustion. There is no particular upper limit for the amount, and it is preferably 100% by volume, more preferably 95% by volume, still more preferably 90% by volume.

The amount of the olefinic hydrocarbons is 10% by volume or less, in view of flame propagation properties and oxidation stability. There is no particular lower limit for the amount, and it is preferably 0% by volume.

The amount of the aromatic hydrocarbons is 65% by volume or less, preferably 50% by volume or less, and preferably 0% by volume or more, more preferably 30% by volume or more, still more preferably 40% by volume or more, in view of combustion efficiency.

The amount of the naphthenic hydrocarbons is 45% by volume or less, preferably 40% by volume or less, more preferably 30% by volume or less, in view of decreasing an amount of THC in exhaust gas. There is no particular lower limit for the amount, and it is preferably 0% by volume.

The amounts of the saturated hydrocarbons, the olefinic hydrocarbons and the aromatic hydrocarbons are each determined by an HPLC method according to JPI-5S-49-97. The amount of the naphthenic hydrocarbons is determined by ASTM D2425, "Standard Test Method for Hydrocarbon Types in Middle Distillates by Mass Spectrometry".

Distillation characteristics of the present fuel oil (4) are not limited as long as an initial boiling point (IBP) is 100 degrees C or higher. The initial boiling point is preferably 100 to 190 degrees C, more preferably 130 to 190 degrees C, most preferably 145 to 190 degrees C. If the initial boiling point is below the lower limit, inflammablity is high and evaporative emission (THC) generates easily and, therefore, handling is difficult.

For distillation characteristics other than the initial boiling point, a 10% by volume distillation temperature (T₁₀) is preferably 120 to 210 degrees C, more preferably 140 to 230 degrees C, most preferably 160 to 230 degrees C; a 30% by volume distillation temperature (T₃₀) is preferably 160 to 220 degrees C; a 50% by volume distillation temperature (T₅₀) is preferably 180 to 240 degrees C; a 70% by volume distillation temperature (T₇₀) is preferably 200 to 265 degrees C; a 90% by volume distillation temperature (T₉₀) is preferably at least 210 degrees C and below 300 degrees C, more preferably at least 210 degrees C and below 295 degrees C; a 95% by volume distillation temperature (T₉₅) is preferably 220 to 315 degrees C, more preferably 220 to 305 degrees C, most preferably 220 to 300 degrees C; and a final boiling point (EP) is preferably 230 to 330 degrees C, more preferably 230 to 310 degrees C, most preferably 230 to 280 degrees C.

If the 10% by volume distillation temperature (T₁₀) is below the lower limit, inflammablity is high and evaporative emission (THC) generates easily and, therefore, handling is difficult. The upper limits of the 95% by volume distillation temperature (T₉₅) and the final boiling point (EP) are set in view of decreasing an amount of THC in exhaust gas.

The initial boiling point (IBP), the 10% by volume distillation temperature (T₁₀), the 30% by volume distillation temperature (T₃₀), the 50% by volume distillation temperature (T₅₀) and the 70% by volume distillation temperature (T₇₀), the 90% by volume distillation temperature (T₉₀), the 95% by volume distillation temperature (T₉₅) and the final boiling point (EP) are each determined according to JIS K 2254, "Petroleum products-Determination of distillation characteristics".

A sulfur content of the present fuel oil (4) is not limited. This is because the present fuel oil (4) is to be used in the aforesaid internal-combustion engine and, as described above, the engine emits a reduced amount of exhaust gas such as NOX and THC and, therefore, does not need to be provided with a catalyst such as a three-way catalyst. In prior internal-combustion engines, a catalyst such as a three-way catalyst is used in order to decrease the amount of exhaust gas such as NOX and THC. Such a catalyst is deactivated when a fuel oil contains a large amount of sulfur. On the other hand, such a catalyst is unnecessary for the present fuel oil (4) and, therefore, a sulfur content is not limited. The sulfur content is preferably 200ppm by mass or less, more preferably 100ppm by mass or less, still more preferably 80ppm by mass or less, still more preferably 20ppm by mass or less, relative to a total mass of the fuel oil, in view of decreasing deterioration of the internal-combustion engine system. There is no particular lower limit for the content, and it is preferably 0ppm by mass.

The sulfur content is determined according to JIS K 2541, "Crude oil and petroleum products-Determination of sulfur content" for 1ppm by mass or more, and according to ASTM D4045-96 "Standard Test Method for Sulfur in Petroleum Products by Hydrogenolysis and Rateometric Colorimetry" for less than 1ppm by mass.

A smoke point of the present fuel oil (4) is preferably 18mm or more, more preferably 21mm or more, but not limited thereto. The smoke point is determined according to JIS K 2203.

A method for producing the present fuel oil (4) is not particularly limited. For example, the present fuel oil (4) may be produced with one or more of hydrocarbon oils such as desulfurized kerosene obtained by desulfurizing kerosene fractions which are obtained by subjecting crude oil to distillation, low aromatic and low sulfur contents hydrodesulfurized kerosene obtained by hydrogenating desulfurized kerosene, kerosene fractions of GTL (Gas to Liquid) which is obtained by converting natural gas into carbon monoxide and hydrogen, followed by F-T (Fischer-Tropsch) synthesis (GTL kerosene), kerosene fractions obtained by hydrodesulfurizing and hydrocracking vacuum distillate (hydrocracked kerosene), kerosene fractions obtained by catalytically cracking residual oil and vacuum distillate (catalytically-cracked kerosene), kerosene fractions obtained by directly desulfurizing heavy oil and residual oil (kerosene obtained by directly desulfurizing heavy oil). Therefore, use may be made of a GTL kerosene composition such as a composition consisting of GTL kerosene and desulfurized kerosene and a composition consisting of GTL kerosene and hydrodesulfurized kerosene; and a kerosene composition which consists of petroleum-based fuel oils only, such as a composition consisting of desulfurized kerosene and hydrocracked kerosene.

If necessary, gasoline base materials may be added as long as the purpose of the invention is not impeded. The gasoline base materials include light naphtha obtained by subjecting crude oil to atmospheric distillation, heavy naphtha obtained by subjecting crude oil to atmospheric distillation, desulfurized full range naphtha obtained by desulfurizing naphtha fractions which are obtained by subjecting crude oil to distillation, desulfurized light naphtha obtained by desulfurizing light naphtha, desulfurized heavy naphtha obtained by desulfurizing heavy naphtha, isomerate gasoline obtained by converting light naphtha to isoparaffin in an isomerization apparatus, alkylates obtained by an addition reaction of lower olefins with hydrocarbons such as isobutane (alkylation), desulfurized alkylates obtained by desulfurizing alkylates, low sulfur content alkylates obtained from desulfurized hydrocarbons, such as desulfurized isobutane, and desulfurized lower olefins, reformed gasoline obtained by catalytic reforming, raffinate which is a residue obtained by extracting aromatics from reformed gasoline with sulfolane (sulfolane raffinate), light fractions of reformed gasoline (light reformed gasoline), middle and heavy fractions of reformed gasoline (middle and heavy reformed gasoline), heavy fractions of reformed gasoline (heavy reformed gasoline), cracked gasoline obtained by catalytic cracking or hydrocracking, light fractions of cracked gasoline (light cracked gasoline), heavy fractions of cracked gasoline (heavy cracked gasoline), desulfurized cracked gasoline obtained by desulfurizing cracked gasoline, desulfurized light cracked gasoline obtained by desulfurizing light fractions of cracked gasoline, desulfurized heavy cracked gasoline obtained by desulfurizing heavy fractions of cracked gasoline. Of these, the following is preferred: gasoline base materials comprising aromatic hydrocarbons, for example, middle and heavy fractions of reformed gasoline, heavy fractions of reformed gasoline, heavy fractions of cracked gasoline, desulfurized cracked gasoline obtained by desulfurizing cracked gasoline and desulfurized heavy cracked gasoline obtained by desulfurizing heavy fractions of cracked gasoline.

### Fuel oil (5)

A fifth fuel oil for the aforesaid internal-combustion engine (hereinafter referred to as fuel oil (5)) comprises 60% by volume or more relative to a total volume of the fuel oil, preferably 80% by volume or more, more preferably 90% by volume or more, still more preferably 93 to 100% by volume, of a hydrocarbon oil, wherein an amount of saturated hydrocarbons is 35% by volume or more relative to the total volume of the hydrocarbon oil, an amount of olefinic hydrocarbons is 10% by volume or less relative to the total volume of the hydrocarbon oil, an amount of aromatic hydrocarbons is 65% by volume or less relative to the total volume of the hydrocarbon oil, an amount of monocyclic aromatic hydrocarbons is 45% by volume or less relative to the total volume of the hydrocarbon oil, an amount of bicyclic aromatic hydrocarbons is 25% by volume or less relative to the total volume of the hydrocarbon oil and an amount of tri- or more cyclic aromatic hydrocarbons is 20% by volume or less relative to the total volume of the hydrocarbon oil; and the fuel oil has an initial boiling point of 130 degrees C or higher. The monocyclic aromatic hydrocarbons are hydrocarbons having one aromatic ring, the bicyclic aromatic hydrocarbons are hydrocarbons having two aromatic rings which are fused with each other, and the tri- or more cyclic aromatic hydrocarbons are hydrocarbons having 3 or more aromatic rings which are fused with one another.

The amount of the saturated hydrocarbons is 35% by volume or more, preferably 40% by volume or more, more preferably 45% by volume or more, still more preferably 50% by volume or more, still more preferably 60% by volume or more, in view of securing good start of combustion. An upper limit for the amount is 100% by volume.

The amount of the olefinic hydrocarbons is 10% by volume or less, preferably 5% by volume or less, more preferably 1% by volume or less, in view of good fuel efficiency, decreasing an amount of THC in exhaust gas and storage stability. There is no particular lower limit for the amount, and it is preferably 0% by volume.

The amount of the aromatic hydrocarbons is 65% by volume or less, preferably 60% by volume or less, more preferably 55% by volume or less, and preferably 0% by volume or more, more preferably 5% by volume or more, still more preferably 10% by volume or more, in view of combustion efficiency.

The amount of the monocyclic aromatic hydrocarbons is 45% by volume or less, preferably 35% by volume or less, more preferably 30% by volume or less, still more preferably 25% by volume or less, in view of good fuel efficiency and decreasing an amount of THC in exhaust gas. There is no particular lower limit for the amount, and it is preferably 0% by volume.

The amount of the bicyclic aromatic hydrocarbons is 25% by volume or less, preferably 15% by volume or less, more preferably 12% by volume or less, still more preferably 10% by volume or less, in view of good fuel efficiency and decreasing an amount of THC in exhaust gas. There is no particular lower limit for the amount, and it is preferably 0% by volume.

The amount of the tri- or more cyclic aromatic hydrocarbons is 20% by volume or less, preferably 10% by volume or less, more preferably 8% by volume or less, still more preferably 7% by volume or less, in view of good fuel efficiency and decreasing an amount of THC in exhaust gas. There is no particular lower limit for the amount, and it is preferably 0% by volume.

The amounts of the saturated hydrocarbons, the olefinic hydrocarbons, the aromatic hydrocarbons, the monocyclic aromatic hydrocarbons, the bicyclic aromatic hydrocarbons and the tri- or more cyclic aromatic hydrocarbons are each determined by an HPLC method according to JPI-5S-49-97.

Distillation characteristics of the present fuel oil (5) are not limited as long as an initial boiling point (IBP) is 130 degrees C or higher. The initial boiling point (IBP) is preferably 130 to 250 degrees C, more preferably 145 to 250 degrees C, most preferably 145 to 190 degrees C. If the initial boiling point is below the lower limit, inflammablity is high and evaporative emission (THC) generates easily and, therefore, handling is difficult.

For distillation characteristics other than the initial boiling point, a 10% by volume distillation temperature (T₁₀) is preferably 140 to 290 degrees C, and a 50% by volume distillation temperature (T₅₀) is preferably 210 to 390 degrees C. A 90% by volume distillation temperature (T₉₀) is preferably at least 240 degrees C, more preferably at least 260 degrees C, still more preferably at least 280 degrees C and still more preferably at least 300 degrees C, and preferably at most 430 degrees C, more preferably at most 400 degrees C, still more preferably at most 380 degrees C and most preferably at most 360 degrees C. A 95% by volume distillation temperature (T₉₅) is preferably at least 250 degrees C, more preferably at least 270 degrees C, still more preferably at least 290 degrees C, still more preferably at least 310 degrees C, and preferably at most 450 degrees C, more preferably at most 430 degrees C, still more preferably at most 400 degrees C, still more preferably at most 380 degrees C, most preferably at most 360 degrees C. A final boiling point (EP) is preferably at least 260 degrees C, more preferably at least 280 degrees C, still more preferably at least 300 degrees C, most preferably at least 320 degrees C, and preferably at most 470 degrees C, more preferably at most 450 degrees C, still more preferably at most 430 degrees C, still more preferably at most 410 degrees C, most preferably at most 380 degrees C.

If the 10% by volume distillation temperature (T₁₀) is below the lower limit, inflammablity is high and evaporative emission (THC) generates easily and, therefore, handling is difficult. The upper limits of the 90% by volume distillation temperature (T₉₀), the 95% by volume distillation temperature (T₉₅) and the final boiling point (EP) are set in view of decreasing an amount of THC in exhaust gas.

The initial boiling point (IBP), the 10% by volume distillation temperature (T₁₀), the 50% by volume distillation temperature (T₅₀), the 90% by volume distillation temperature (T₉₀), the 95% by volume distillation temperature (T₉₅) and the final boiling point (EP) are each determined according to JIS K 2254, "Petroleum products-Determination of distillation characteristics".

A sulfur content of the present fuel oil (5) is not limited. This is because the present fuel oil (5) is to be used in the aforesaid internal-combustion engine and, as described above, the engine emits a reduced amount of exhaust gas such as NOX and THC and, therefore, does not need to be provided with a catalyst such as a three-way catalyst. In prior internal-combustion engines, a catalyst such as a three-way catalyst is used in order to decrease the amount of exhaust gas such as NOX and THC. Such a catalyst is deactivated when a fuel oil contains a large amount of sulfur. On the other hand, such a catalyst is unnecessary for the present fuel oil (5) and, therefore, a sulfur content is not limited. The sulfur content is preferably 2000ppm by mass or less, more preferably 500ppm by mass or less, still more preferably 200ppm by mass or less, still more preferably 80ppm by mass or less, most preferably 20ppm by mass or less, relative to a total mass of the fuel oil, in view of decreasing deterioration of the internal-combustion engine system. There is no particular lower limit for the content, and it is preferably 0ppm by mass.

The sulfur content is determined according to JIS K 2541, "Crude oil and petroleum products-Determination of sulfur content" for 1ppm by mass or more, and according to ASTM D4045-96 "Standard Test Method for Sulfur in Petroleum Products by Hydrogenolysis and Rateometric Colorimetry" for less than 1ppm by mass.

A cetane index and a cetane number of the present fuel oil (5) are not limited. The cetane index is preferably 30 or higher, more preferably 45 or higher, still more preferably 50 or higher, most preferably 55 or higher, and the cetane number is preferably 20 or higher, more preferably 46 or higher, still more preferably 50 or higher, in view of good fuel efficiency and decreasing an amount of THC in exhaust gas. The cetane index and the cetane number are each determined according to JIS K 2280, "Test method for cetane number and calculation of cetane index".

A carbon residue content of the present fuel oil (5) is not limited. In view of continuing operation for a long time, a carbon residue content in 10% residual oil is preferably 1.0% or less, more preferably 0.1% or less, still more preferably 0.05% or less. The carbon residue content is determined according to JIS K 2270, "Determination of carbon residue".

Fluidity at a low temperature of the present fuel oil (5) is not limited. In view of handling in cold regions, a cloud point is preferably +10 degrees C or lower, more preferably +5 degrees C or lower, still more preferably 0 degrees C or lower, still more preferably -5 degrees C or lower, most preferably -10 degrees C or lower. A pour point is preferably +5 degrees C or lower, more preferably -2.5 degrees C or lower, still more preferably -7.5 degrees C or lower, still more preferably -20 degrees C or lower, most preferably -30 degrees C or lower. A plugging point is preferably +10 degrees C or lower, more preferably -1 degrees C or lower, still more preferably -5 degrees C or lower, still more preferably -12 degrees C or lower, most preferably -19 degrees C or lower. The cloud point and the pour point are each determined according to JIS K 2269, "Testing methods for cloud point and pour point", and the plugging point is determined according to JIS K 2288, "Testing method for plugging point".

A method for producing the present fuel oil (5) is not particularly limited. For example, the present fuel oil (5) may be produced with one or more of hydrocarbon oils such as desulfurized gas oil obtained by desulfurizing gas oil fractions which are obtained by subjecting crude oil to distillation, heavy gas oil obtained by subjecting crude oil to distillation, GTL (Gas to Liquid) gas oil which is obtained by converting natural gas into carbon monoxide and hydrogen, followed by F-T (Fischer-Tropsch) synthesis, gas oil fractions obtained by hydrodesulfurizing and hydrocracking vacuum distillate, hydrocracked gas oil obtained by hydrodesulfurizing and hydrocracking vacuum distillate, gas oil obtained by directly desulfurizing heavy oil and residual oil (gas oil obtained by directly desulfurizing heavy oil), and catalytically cracked gas oil obtained by catalytically cracking residual oils and vacuum distillate, all of which are known as gas oil base materials. Preferred gas oil base materials are desulfurized gas oil, GTL gas oil and hydrocracked gas oil.

Kerosene base materials may be further added to the aforesaid gas oil base materials, in view of improving fluidity at a low temperature. The kerosene base materials include, for example, desulfurized kerosene obtained by desulfurizing kerosene fractions which are obtained by subjecting crude oil to distillation, low aromatic and low sulfur contents hydrodesulfurized kerosene obtained by hydrogenating desulfurized kerosene, kerosene fractions of GTL (Gas to Liquids) obtained by converting natural gas into carbon monoxide and hydrogen, followed by F-T (Fischer-Tropsch) synthesis (GTL kerosene), kerosene fractions obtained by hydrodesulfurizing and hydrocracking vacuum distillate (hydrocracked kerosene), kerosene fractions obtained by catalytically cracking residual oil and vacuum distillate (catalytically cracked kerosene), and kerosene fractions obtained by directly desulfurizing heavy oil and residual oil (kerosene obtained by directly desulfurizing heavy oil). Preferred kerosene base materials are desulfurized kerosene, GTL kerosene, GTL kerosene and catalytically cracked kerosene.

If necessary, gasoline base materials may be added as long as the purpose of the invention is not impeded. The gasoline base materials include light naphtha obtained by subjecting crude oil to atmospheric distillation, heavy naphtha obtained by subjecting crude oil to atmospheric distillation, desulfurized full range naphtha obtained by desulfurizing naphtha fractions which are obtained by subjecting crude oil to distillation, desulfurized light naphtha obtained by desulfurizing light naphtha, desulfurized heavy naphtha obtained by desulfurizing heavy naphtha, isomerate gasoline obtained by converting light naphtha to isoparaffin in an isomerization apparatus, alkylates obtained by an addition reaction of lower olefins with hydrocarbons such as isobutane (alkylation), desulfurized alkylates obtained by desulfurizing alkylates, low sulfur content alkylates obtained from desulfurized hydrocarbons, such as desulfurized isobutane, and desulfurized lower olefins, reformed gasoline obtained by catalytic reforming, raffinate which is a residue obtained by extracting aromatics from reformed gasoline with sulfolane (sulfolane raffinate), light fractions of reformed gasoline (light reformed gasoline), middle and heavy fractions of reformed gasoline (middle and heavy reformed gasoline), heavy fractions of reformed gasoline (heavy reformed gasoline), cracked gasoline obtained by catalytic cracking or hydrocracking, light fractions of cracked gasoline (light cracked gasoline), heavy fractions of cracked gasoline (heavy cracked gasoline), desulfurized cracked gasoline obtained by desulfurizing cracked gasoline, desulfurized light cracked gasoline obtained by desulfurizing light fractions of cracked gasoline, desulfurized heavy cracked gasoline obtained by desulfurizing heavy fractions of cracked gasoline. In view of the initial boiling point of the fuel oil, it is not much preferred to add fractions having a low boiling point. Of these gasoline base materials, ones comprising aromatic hydrocarbons are particularly preferred. For example, middle and heavy fractions of reformed gasoline, heavy fractions of cracked gasoline, desulfurized cracked gasoline obtained by desulfurizing cracked gasoline and desulfurized heavy cracked gasoline obtained by desulfurizing heavy fractions of cracked gasoline are preferred.

### Fuel oil (6)

A sixth fuel oil for the aforesaid internal-combustion engine (hereinafter referred to as fuel oil (6)) has an initial boiling point (IBP) of 22 to 80 degrees C, a 10% by volume distillation temperature of 40 to 100 degrees C, a 90% by volume distillation temperature of 220 to 400 degrees C, a 95% by volume distillation temperature of 230 to 440 degrees C and a final boiling point of 260 to 470 degrees C.

The initial boiling point (IBP) is 22 to 80 degrees C, preferably 25 to 70 degrees C, more preferably 26 to 60 degrees C, in view of securing good start of combustion.

The 10% by volume distillation temperature (T₁₀) is 40 to 100 degrees C, preferably 40 to 80 degrees C, more preferably 40 to 70 degrees C, in view of securing good start of combustion.

A 50% by volume distillation temperature (T₅₀) is preferably 130 to 300 degrees C, but not limited thereto.

The 90% by volume distillation temperature (T₉₀) is 220 to 400 degrees C, preferably 230 to 390 degrees C, more preferably 230 to 370 degrees C, most preferably 240 to 370 degrees C. The 95% by volume distillation temperature (T₉₅) is 230 to 440 degrees C, preferably 250 to 430 degrees C, more preferably 250 to 400 degrees C, most preferably 250 to 380 degrees C. The final boiling point (EP) is 260 to 470 degrees C, preferably 260 to 450 degrees C, more preferably 260 to 410 degrees C, most preferably 260 to 390 degrees C. The upper limits of the 90% by volume distillation temperature (T₉₀), the 95% by volume distillation temperature (T₉₅) and the final boiling point (EP) are set in view of decreasing an amount of THC in exhaust gas.

The initial boiling point (IBP), the 10% by volume distillation temperature (T₁₀), the 50% by volume distillation temperature (T₅₀), the 90% by volume distillation temperature (T₉₀), the 95% by volume distillation temperature (T₉₅) and the final boiling point (EP) are each determined according to JIS K 2254, "Petroleum products-Determination of distillation characteristics".

The present fuel oil (6) preferably comprises 60% by volume or more relative to a total volume of the fuel oil, more preferably 80% by volume or more, still more preferably 90% by volume or more, still more preferably 93 to 100% by volume, of a hydrocarbon oil. Amounts of saturated hydrocarbons, aromatic hydrocarbons and olefinic hydrocarbons are not limited. Preferred amounts are as follows.

The amount of saturated hydrocarbons is preferably 35% by volume or more, more preferably 40% by volume or more, still more preferably 45% by volume or more, relative to the total volume of the hydrocarbon oil, in view of securing good start of combustion. The amount of olefinic hydrocarbons is preferably 1% by volume or more, more preferably 3% by volume or more, relative to the total volume of the hydrocarbon oil, in view of flame propagation properties.

The amount of aromatic hydrocarbons is preferably 5% by volume or more, more preferably 10% by volume or more, still more preferably 15% by volume or more, relative to the total volume of the hydrocarbon oil, in view of combustion efficiency. An upper limit for the amount is preferably 65% by volume, more preferably 50% by volume, still more preferably 40% by volume, but not restricted thereto.

An amount of monocyclic aromatic hydrocarbons is preferably 40% by volume or less, more preferably 35% by volume or less, still more preferably 30% by volume or less, relative to the total volume of the hydrocarbon oil, in view of good fuel efficiency and decreasing an amount of THC in exhaust gas. An amount of bicyclic aromatic hydrocarbons is preferably 27% by volume or less, more preferably 25% by volume or less, still more preferably 15% by volume or less, relative to the total volume of the hydrocarbon oil, in view of good fuel efficiency and decreasing an amount of THC in exhaust gas. An amount of tri- or more cyclic aromatic hydrocarbons is preferably 15% by volume or less, more preferably 10% by volume or less, still more preferably 7% by volume or less, relative to the total volume of the hydrocarbon oil, in view of good fuel efficiency and decreasing an amount of THC in exhaust gas. The monocyclic aromatic hydrocarbons are hydrocarbons having one aromatic ring, the bicyclic aromatic hydrocarbons are hydrocarbons having two aromatic rings which are fused with each other, and the tri- or more cyclic aromatic hydrocarbons are hydrocarbons having 3 or more aromatic rings which are fused with one another.

The amounts of the saturated hydrocarbons, the aromatic hydrocarbons, the monocyclic aromatic hydrocarbons, the bicyclic aromatic hydrocarbons,thetri-ormorecyclicaromatic hydrocarbons and the olefinic hydrocarbons are each determined by an HPLC method according to JPI-5S-49-97.

A sulfur content of the present fuel oil (6) is not limited. This is because the present fuel oil (6) is to be used in the aforesaid internal-combustion engine and, as described above, the engine emits a reduced amount of exhaust gas such as NOX and THC and, therefore, does not need to be provided with a catalyst such as a three-way catalyst. In prior internal-combustion engines, a catalyst such as a three-way catalyst is used in order to decrease the amount of exhaust gas such as NOX and THC. Such a catalyst is deactivated when a fuel oil contains a large amount of sulfur. On the other hand, such a catalyst is unnecessary for the present fuel oil (6) and, therefore, a sulfur content is not limited. The sulfur content is preferably 2000ppm by mass or less, more preferably 1000ppm by mass or less, still more preferably 500ppm by mass or less, still more preferably 200ppm by mass or less, most preferably 50ppm by mass or less, relative to a total mass of the fuel oil, in view of decreasing deterioration of the internal-combustion engine system. There is no particular lower limit for the content, and it is preferably 0ppm by mass.

The sulfur content is determined according to JIS K 2541, "Crude oil and petroleum products-Determination of sulfur content" for 1ppm by mass or more, and according to ASTM D4045-96 "Standard Test Method for Sulfur in Petroleum Products by Hydrogenolysis and Rateometric Colorimetry" for less than 1ppm by mass.

A method for producing the present fuel oil (6) is not particularly limited as long as the purpose of the invention is not impeded.

For example, the present fuel oil (6) may be produced with one or more of base materials such as desulfurized gas oil obtained by desulfurizing gas oil fractions which are obtained by subjecting crude oil to distillation, heavy gas oil obtained by subjecting crude oil to distillation, GTL (Gas to Liquides) gas oil which is obtained by converting natural gas into carbon monoxide and hydrogen, followed by F-T (Fischer-Tropsch) synthesis, gas oil fractions obtained by hydrodesulfurizing and hydrocracking vacuum distillate, hydrocracked gas oil obtained by hydrodesulfurizing and hydrocracking vacuum distillate, gas oil obtained by directly desulfurizing heavy oil and residual oil (gas oil obtained by directly desulfurizing heavy oil), and catalytically cracked gas oil obtained by catalytically cracking residual oil and vacuum distillate, all of which are known as gas oil base materials.

Kerosene base materials may be also used. The kerosene base materials include, for example, desulfurized kerosene obtained by desulfurizing kerosene fractions which are obtained by subjecting crude oil to distillation, low aromatic and low sulfur contents hydrodesulfurized kerosene obtained by hydrogenating desulfurized kerosene, kerosene fractions of GTL (Gas to Liquids) obtained by converting natural gas into carbon monoxide and hydrogen, followed by F-T (Fischer-Tropsch) synthesis, kerosene fractions obtained by hydrodesulfurizing and hydrocracking vacuum distillate (hydrocracked kerosene), kerosene fractions obtained by catalytically cracking residual oil and vacuum distillate (catalytically cracked kerosene), and kerosene fractions obtained by directly desulfurizing heavy oil and residual oil (kerosene obtained by directly desulfurizing heavy oil).

Gasoline base materials may be added so that the initial boiling point (IBP) and the 10% by volume distillation temperature (T₁₀) are met. The gasoline base materials include light naphtha obtained by subjecting crude oil to atmospheric distillation, heavy naphtha obtained by subjecting crude oil to atmospheric distillation, desulfurized full range naphtha obtained by desulfurizing naphtha fractions which are obtained by subj ecting crude oil to distillation, desulfurized light naphtha obtained by desulfurizing light naphtha, desulfurized heavy naphtha obtained by desulfurizing heavy naphtha, isomerate gasoline obtained by converting light naphtha to isoparaffin in an isomerization apparatus, alkylates obtained by an addition reaction of lower olefins with hydrocarbons such as isobutane (alkylation), desulfurized alkylates obtained by desulfurizing alkylates, low sulfur content alkylates obtained from desulfurized hydrocarbons, such as desulfurized isobutane, and desulfurized lower olefins, reformed gasoline obtained by catalytic reforming, raffinate which is a residue obtained by extracting aromatics from reformed gasoline with sulfolane (sulfolane raffinate), light fractions of reformed gasoline (light reformed gasoline), middle and heavy fractions of reformed gasoline (middle and heavy reformed gasoline), heavy fractions of reformed gasoline (heavy reformed gasoline), cracked gasoline obtained by catalytic cracking or hydrocracking, light fractions of cracked gasoline (light cracked gasoline), heavy fractions of cracked gasoline (heavy cracked gasoline), desulfurized cracked gasoline obtained by desulfurizing cracked gasoline, desulfurized light cracked gasoline obtained by desulfurizing light fractions of cracked gasoline, and desulfurized heavy cracked gasoline obtained by desulfurizing heavy fractions of cracked gasoline.

In one embodiment, the present fuel oil (6) may essentially comprise a base material having a final boiling point of at least 70 degrees C and below 130 degrees C and a base material having a final boiling point of 250 to 470 degrees C. This embodiment may be carried out, for example, using at least one of light naphtha, isomerate gasoline, desulfurized light naphtha and commercially available regular gasoline (e.g., a composition essentially comprising light naphtha, catalytically reformed gasoline and cracked gasoline) and at least one of the following kerosene base materials and gas oil base materials: desulfurized kerosene, catalytically cracked kerosene, hydrocracked kerosene, GTL kerosene, desulfurized gas oil, deep desulfurized gas oil, heavy gas oil, GTL gas oil, hydrocracked gas oil, gas oil obtained by directly desulfurizing heavy oil and catalytically cracked gas oil. An amount of the base material having a final boiling point of at least 70 degrees C and below 130 degrees C is not limited. The amount is preferably 1% by volume or more, more preferably 3% by volume or more, still more preferably 5% by volume or more, still more preferably 10% by volume or more, and preferably 99% by volume or less, more preferably 97% by volume or less, still more preferably 95% by volume or less, still more preferably 90% by volume or less, relative to the total volume of the fuel oil. An amount of the base material having a final boiling point of 250 to 470 degrees C is not limited. The amount is preferably 1% by volume or more, more preferably 3% by volume or more, still more preferably 5% by volume or more, still more preferably 10% by volume or more, and preferably 99% by volume or less, more preferably 97% by volume or less, still more preferably 95% by volume or less, still more preferably 90% by volume or less, relative to the total volume of the fuel oil.

In another embodiment, the present fuel oil (6) may essentially comprise a base material having a final boiling point of at least 130 degrees C and below 220 degrees C and a base material having a final boiling point of 250 to 470 degrees C. This embodiment may be carried out, for example, using at least one of heavy naphtha, full range naphtha, desulfurized heavy naphtha, desulfurized full range naphtha, GTL naphtha, alkylates and commercially available premium gasoline (e.g., a composition essentially comprising catalytically reformed gasoline, cracked gasoline and alkylates) and at least one of the following kerosene base materials and gas oil base materials: desulfurized kerosene, hydrocracked kerosene, catalytically cracked kerosene, GTL kerosene, desulfurized gas oil, deep desulfurized gas oil, heavy gas oil, GTL gas oil, hydrocracked gas oil, gas oil obtained by directly desulfurising heavy oil and catalytically cracked gas oil. In this embodiment, the base material having a final boiling point of at least 130 degrees C and below 220 degrees C includes heavy naphtha, full range naphtha, desulfurized heavy naphtha, desulfurized full range naphtha, GTL naphtha, alkylates and commercially available premium gasoline, but not limited thereto. Any combination of base materials may be used as long as the resulting fuel oil has the aforesaid distillation characteristics. For example, a composition consisting of only heavy naphtha and heavy reformed gasoline may be used, even if the composition does not meet the JIS standards, unlike a commercially available gasoline composition. An amount of the base material having a final boiling point of at least 130 degrees C and below 220 degrees C is not limited. The amount is preferably 1% by volume or more, more preferably 3% by volume or more, still more preferably 5% by volume or more, still more preferably 10% by volume or more, and preferably 99% by volume or less, more preferably 97% by volume or less, still more preferably 95% by volume or less, still more preferably 90% by volume or less, relative to the total volume of the fuel oil. An amount of the base material having a final boiling point of 250 to 470 degrees C is not limited. The amount is preferably 1% by volume or more, more preferably 3% by volume or more, still more preferably 5% by volume or more, still more preferably 10% by volume or more, and preferably 99% by volume or less, more preferably 97% by volume or less, still more preferably 95% by volume or less, still more preferably 90% by volume or less, relative to the total volume of the fuel oil.

The base material having a final boiling point of 250 to 470 degrees C includes two kinds of base materials, i.e., a base material having a 90% by volume distillation temperature (T₉₀) of 220 to 310 degrees C and a base material having a 90% by volume distillation temperature (T₉₀) of above 310 degrees C and at most 430 degrees C. Examples of the former base material include desulfurized kerosene, catalytically cracked kerosene, hydrocracked kerosene and GTL kerosene. Examples of the latter base material include desulfurized gas oil, deep desulfurized gas oil, heavy gas oil, GTL gas oil, hydrocracked gas oil, gas oil obtained by directly desulfurizing heavy oil and catalytically cracked gas oil. Either one or both of the two kinds of base materials may be used as the base material having a final boiling point of 250 to 470 degrees C.

### Fuel oil (7)

A seventh fuel oil for the aforesaid internal-combustion engine (hereinafter referred to as fuel oil (7)) comprises a gasoline base material having a Research Octane Number of 96.0 or less, and a base material comprising 10% by volume or more of polycyclic aromatic hydrocarbons. The Research Octane Number (RON) is determined according to JIS K 2280, "Determination of octane number and cetane number".

Any kinds of the gasoline base material having a Research Octane Number of 96.0 or less may be used as long as such a requirement is met. Examples of the gasoline base material include light naphtha obtained by subjecting crude oil to atmospheric distillation, heavy naphtha obtained by subjecting crude oil to atmospheric distillation, desulfurized full range naphtha obtained by desulfurizing naphtha fractions which are obtained by subjecting crude oil to distillation, desulfurized light naphtha obtained by desulfurizing light naphtha, desulfurized heavy naphtha obtained by desulfurizing heavy naphtha, isomerate gasoline obtained by converting light naphtha to isoparaffin in an isomerization apparatus, alkylates obtained by an addition reaction of lower olefins with hydrocarbons such as isobutane (alkylation), desulfurized alkylates obtained by desulfurizing alkylates, low sulfur content alkylates obtained from desulfurized hydrocarbons, such as desulfurized isobutane, and desulfurized lower olefins, raffinate which is a residue obtained by extracting aromatics from catalytically reformed gasoline with sulfolane (sulfolane raffinate), light fractions of cracked gasoline obtained by catalytic cracking (light cracked gasoline), and light fractions of reformed gasoline (light reformed gasoline). Of these, light naphtha, heavy naphtha, desulfurized full range naphtha, desulfurized light naphtha, desulfurized heavy naphtha and isomerate gasoline are preferred. An amount of the gasoline base material having a Research Octane Number of 96.0 or less is not limited. The amount is preferably 1% by volume or more, more preferably 3% by volume or more, still more preferably 5% by volume or more, still more preferably 10% by volume or more, and preferably 99% by volume or less, more preferably 97% by volume or less, still more preferably 95% by volume or less, still more preferably 90% by volume or less, relative to the total volume of the fuel oil.

Any kinds of the base material comprising 10% by volume or more of polycyclic aromatic hydrocarbons may be used as long as such a requirement is met. The polycyclic aromatic hydrocarbons are hydrocarbons having 2 or more aromatic rings which are fused with one another, and include bicyclic aromatic hydrocarbons such as naphthalene, tricyclic aromatic hydrocarbons such as acenaphthene, acenaphthylene, anthracene, fluorene and phenanthrene, and tetra- or more cyclic aromatic hydrocarbons such as pyrene, fluoranthene and benzo[a]pyrene. Examples of the aforesaid base material include heavy fractions of reformed gasoline obtained by catalytic reforming (in particular, fractions having a boiling point of 160 degrees C or higher), heavy fractions of cracked gasoline obtained by catalytic cracking (in particular, fractions having a boiling point of 160 degrees C or higher), catalytically cracked kerosene, heavy fractions of catalytically cracked kerosene, catalytically cracked gas oil, heavy fractions of catalytically cracked gas oil, bicyclic aromatic hydrocarbons such as naphthalene, tricyclic aromatic hydrocarbons such as acenaphthene, acenaphthylene, anthracene, fluorene and phenanthrene, tetra- or more cyclic aromatic hydrocarbons, and aromatic hydrocarbon-type solvents containing one or more polycyclic aromatic hydrocarbons (e.g., S200, trade name, ex ExxonMobil Chemical Company, Inc.). Of these, ones which are liquid at room temperature are preferred, and catalytically cracked kerosene, catalytically cracked gas oil and the aromatic hydrocarbon-type solvents are particularly preferred. The base material may be, as described above, of any kind as long as it comprises 10% by volume or more of polycyclic aromatic hydrocarbons, and preferably comprises 20% by volume or more, more preferably 30% by volume or more, still more preferably 40% by volume or more of polycyclic aromatic hydrocarbons. An upper limit for the amount of the polycyclic aromatic hydrocarbons is 100% by volume, preferably 95% by volume. An amount of the base material comprising 10% by volume or more of polycyclic aromatic hydrocarbons is not limited. The amount is preferably 1% by volume or more, more preferably 3% by volume or more, still more preferably 5% by volume or more, still more preferably 10% by volume or more, and preferably 99% by volume or less, more preferably 97% by volume or less, still more preferably 95% by volume or less, still more preferably 90% by volume or less, relative to the total volume of the fuel oil.

Distillation characteristics of the present fuel oil (7) are not limited. An initial boiling point (IBP) is preferably 21 to 75 degrees C, more preferably 28 to 65 degrees C, still more preferably 30 to 60 degrees C, in view of securing startability of combustion. A 10% by volume distillation temperature (T₁₀) is preferably 40 to 85 degrees C, more preferably 45 to 80 degrees C, still more preferably 50 to 75 degrees C, in view of securing startability of combustion. A 50% by volume distillation temperature (T₅₀) is preferably 130 to 300 degrees C, but not limited thereto.

A 90% by volume distillation temperature (T₉₀) is preferably 240 to 390 degrees C, more preferably 240 to 360 degrees C, still more preferably 240 to 330 degrees C, most preferably 240 to 310 degrees C. A 95% by volume distillation temperature (T₉₅) is preferably 250 to 430 degrees C, more preferably 250 to 400 degrees C, still more preferably 250 to 380 degrees C, most preferably 250 to 320 degrees C. A final boiling point (EP) is preferably 260 to 450 degrees C, more preferably 260 to 410 degrees C, still more preferably 260 to 390 degrees C, most preferably 260 to 360 degrees C. The upper limits of the 90% by volume distillation temperature (T₉₀), the 95% by volume distillation temperature (T₉₅) and the final boiling point (EP) are set in view of decreasing an amount of THC in exhaust gas.

The initial boiling point (IBP), the 10% by volume distillation temperature (T₁₀), the 50% by volume distillation temperature (T₅₀), the 90% by volume distillation temperature (T₉₀), the 95% by volume distillation temperature (T₉₅) and the final boiling point (EP) are each determined according to JIS K 2254, "Petroleum products-Determination of distillation characteristics".

The present fuel oil (7) preferably comprises 60% by volume or more relative to a total volume of the fuel oil, more preferably 80% by volume or more, still more preferably 90% by volume or more, still more preferably 93 to 100% by volume, of a hydrocarbon oil. Amounts of saturated hydrocarbons, aromatic hydrocarbons and olefinic hydrocarbons are not limited. Preferred amounts are as follows.

The amount of saturated hydrocarbons is preferably 35% by volume or more, more preferably 40% by volume or more, still more preferably 45% by volume or more, relative to the total volume of the hydrocarbon oil, in view of securing good start of combustion. The amount of olefinic hydrocarbons is preferably 1% by volume or more, more preferably 5% by volume or more, relative to the total volume of the hydrocarbon oil, in view of flame propagation properties.

The amount of aromatic hydrocarbons is preferably 5% by volume or more, more preferably 10% by volume or more, still more preferably 15% by volume or more, relative to the total volume of the hydrocarbon oil, in view of combustion efficiency. An upper limit for the amount is preferably 65% by volume, more preferably 60% by volume, still more preferably 55% by volume, but not restricted thereto.

An amount of monocyclic aromatic hydrocarbons is preferably 35% by volume or less, more preferably 30% by volume or less, still more preferably 27% by volume or less, and preferably 0% by volume or more, more preferably 1% by volume or more, still more preferably 3% by volume or more, relative to the total volume of the hydrocarbon oil, in view of good fuel efficiency and decreasing an amount of THC in exhaust gas. An amount of bicyclic aromatic hydrocarbons is preferably 25% by volume or less, more preferably 15% by volume or less, still more preferably 10% by volume or less, and preferably 0% by volume or more, more preferably 1% by volume or more, still more preferably 3% by volume or more, relative to the total volume of the hydrocarbon oil, in view of good fuel efficiency and decreasing an amount of THC in exhaust gas. An amount of tri- or more cyclic aromatic hydrocarbons is preferably 15% by volume or less, more preferably 10% by volume or less, still more preferably 7% by volume or less, and preferably 0% by volume or more, more preferably 1% by volume or more, still more preferably 3% by volume or more, relative to the total volume of the hydrocarbon oil, in view of good fuel efficiency and decreasing an amount of THC in exhaust gas. A total amount of the bi- or more cyclic aromatic hydrocarbons is preferably 1% by volume or more, more preferably 3% by volume or more.

The amounts of the saturated hydrocarbons, the aromatic hydrocarbons, the monocyclic aromatic hydrocarbons, the bicyclic aromatichydrocarbons,thetri-or morecyclic aromatic hydrocarbons and the olefinic hydrocarbons are each determined by an HPLC method according to JPI-5S-49-97.

A sulfur content of the present fuel oil (7) is not limited. This is because the present fuel oil (7) is to be used in the aforesaid internal-combustion engine and,asdescribed above,theengineemits a reduced amount of exhaust gas such as NOX and THC and, therefore, does not need to be provided with a catalyst such as a three-way catalyst. In prior internal-combustion engines, a catalyst such as a three-way catalyst is used in order to decrease the amount of exhaust gas such as NOX and THC. Such a catalyst is deactivated when a fuel oil contains a large amount of sulfur. On the other hand, such a catalyst is unnecessary for the present fuel oil (7) and, therefore, a sulfur content is not limited. The sulfur content is preferably 2000ppm by mass or less, more preferably 500ppm by mass or less, still more preferably 200ppm by mass or less, still more preferably 80ppm by mass or less, most preferably less than 20ppm by mass, relative to a total mass of the fuel oil, in view of decreasing deterioration of the internal-combustion engine system. There is no particular lower limit for the content, and it is preferably 0ppm by mass.

The sulfur content is determined according to JIS K 2541, "Crude oil and petroleum products-Determination of sulfur content" for 1ppm by mass or more, and according to ASTM D4045-96 "Standard Test Method for Sulfur in Petroleum Products by Hydrogenolysis and Rateometric Colorimetry" for less than 1ppm by mass.

A method for producing the present fuel oil (7) is not particularly limited as long as the purpose of the invention is not impeded. The fuel oil (7) may be produced with one or more of the aforesaid gasoline base materials having a Research Octane Number of 96.0 or less, and one or more of the aforesaid base materials comprising 10% by volume or more of polycyclic aromatic hydrocarbons.

In the production of the present fuel oils (1) to (7), an oxygen-containing compound may be further added. Examples of the oxygen-containing compound include ethers such as methyl t-butyl ether (MTBE) and ethyl t-butyl ether (ETBE), and alcohols such as methanol, ethanol, 1-butanol, 2-butanol and isobutanol. An amount of the oxygen-containing compound in the fuel oils (1) to (7) is preferably 40% by volume or less, more preferably 20% by volume or less, still more preferably 10% by volume or less, further preferably 7% by volume, but not limited thereto.

The fuel oils (1) to (7) may comprise additives such as colorants for identification, antioxidants for improving oxidation stability, metal-inactivating agents, corrosion inhibitors, detergents for keeping fuel lines clean, and lubricity improvers. The fuel oil (5) may comprise flow improvers for improving fluidity at a low temperature and cetane number improvers.

In order to start the internal-combustion engine with one of the present fuel oils (1) to (7) in a more stable manner, it is preferred to feed gas comprising nitrogen and optionally noble gas as well as oxygen to the combustion chamber when the engine is started, i.e., the combustion is started. The amount of oxygen is preferably 10 to 50% by volume, more preferably 10 to 40% by volume, relative to the total volume of the gas. The amount of nitrogen is preferably 50 to 90% by volume, more preferably 60 to 90% by volume, relative to the total volume of the gas. The amount of the noble gas is preferably 0 to 20% by volume, more preferably 0 to 15% by volume, relative to the total volume of the gas. The noble gas is one or more of the elements of group 18 of the periodic table, typically argon.

After the engine is started, the amount ratio of oxygen in the gas may be increased gradually or in a stepwise manner. When the operation of the engine reaches a steady state, typically, 10 to 30 seconds after the start of the engine, gas comprising 65% by volume or more of oxygen, preferably 75 to 100% by volume, more preferably 85 to 100% by volume, still more preferably 90 to 100% by volume, most preferably 100% by volume, of oxygen may be subjected to combustion, so that the operation can stably continue and the emission of NOX is decreased. In the conventional internal-combustion engine in which air is used, nitrogen which is contained in a large amount in air decreases action of oxygen in the combustion and, as a result, some hydrocarbons are unburned in a combustion chamber. The unburned hydrocarbons are emitted as exhaust gas. On the contrary, gas comprising 65% by volume or more of oxygen is used in the present internal-combustion engine. Therefore, a smaller amount of hydrocarbons remain unburned and, accordingly, the amount of emitted total hydrocarbons (THC) is decreased and the combustion efficiency is higher.

When the operation reaches a steady state, the gas to be fed may comprise nitrogen and/or noble gas to the extent that the present effects are not impaired. The amount of nitrogen may be 0 to 35% by volume, preferably 0 to 15% by volume, relative to the total volume of the gas. The amount of the noble gas may be 0 to 10% by volume, preferably 0 to 5% by volume, relative to the total volume of the gas. When the amounts of nitrogen and the noble gas are in these ranges, the engine may attain an effect of lowering the combustion temperature. Further, the emission amount of NOX is relatively small, even though the gas comprises nitrogen.

In order to make it possible to adjust the amount ratio of components of the gas when the engine is started and when the operation of the engine reaches a steady state and to decrease fluctuation in pressure so that the gas is stably fed to the combustion chamber, it is preferred to feed oxygen, nitrogen and noble gas to the combustion chamber from each bomb for each gas, as shown in Fig. 1. Nitrogen may be fed from an air bomb in place of a nitrogen bomb, or in a naturally-aspirated manner. In Fig. 1, nitrogen, oxygen and noble gas, argon, are fed to the combustion chamber from air bomb 2, oxygen bomb 3 and argon bomb 4, respectively, via preserver 5.

In the present internal-combustion engine, the gas to be subjected to combustion comprises 65% by volume or more of oxygen. As a result, the emission of NOX is significantly decreased and, therefore, any expensive three-way catalyst or NOX storage-reduction catalyst is not needed. This makes it possible to simplify an internal-combustion engine and to reduce costs. However, the use of these catalysts is not excluded in the present internal-combustion engine. A small amount of the three-way catalyst, another conventional catalyst or an adsorbent may be used as needed in the present internal-combustion engine.

The present internal-combustion engine may be provided with a reformer for reforming the fuel oil, if necessary. This makes it possible to supply, to the internal-combustion engine, a fuel oil which is made heavy and has a good combustion efficiency. A whole of the fuel oil may be reformed, but only a part of the fuel oil may be reformed.

In order to prevent knocking in the present internal-combustion engine, a compression ratio may be decreased, for example, to 8.5 or lower (and/or) an exit temperature of cooling water may be decreased, for example, to a temperature of 50 to 80 degrees C, as needed. In order to decrease resistance to an intake of oxygen, it is preferred to provide the internal-combustion engine with a buffer back which is expandable and shrinkable. In order to prevent backfire, it is preferred to operate the internal-combustion engine in a low rotation range, not to lower a negative intake pressure too much, for example, not to be 400mmHg or lower, and/or to adjust a valve clearance.

### EXAMPLES

The present invention will be explained with reference to the following Examples, but is not limited thereto.

Each of the fuel oils obtained in the following Examples and Comparative Examples was used in the internal-combustion engine system shown in Fig. 1 to determine the amounts of NOX and TCH emitted. Internal-combustion engine 10 was of four-cycle stroke type and had two cylinders having a total displacement of 359cc. A fuel oil was fed from fuel tank 1 to a combustion chamber of the internal-combustion engine 10, and gas components were fed from air bomb 2, oxygen bomb 3 and argon bomb 4 to preserver 5 and then to the combustion chamber. Exhaust gas were processed with oxidation catalyst 6 and then emitted through cooling tube 7. Exhaust gas predominantly contained argon gas and carbon dioxide. In addition, water was emitted as liquid.

The internal-combustion engine was operated as follows. At the start of the engine, gas comprising 20.9% by volume of oxygen, 0. 9% by volume of argon and 78.1% by volume of nitrogen was fed to the combustion chamber. Thirty seconds after the start of the engine, it was visually confirmed that the operation of the engine reached a steady state. After further 30 seconds of the operation, the gas composition was set so as to comprise 89.3% by volume of oxygen and 10.7% by volume of nitrogen and then the operation was further continued. The operation continued for 100 hours without any trouble. The internal-combustion engine was operated at a rotation number of 3000rpm, a compression ratio of 7.6 and a temperature of cooling water of 60 degrees C.

### Determination of the amount of NOX emitted

It was confirmed visually and on a basis of a rotation number in an oscilloscope that the combustion reached a steady state. After 5 to 10 seconds, sampling of the exhaust gas was started, using a sampling bag. After ten seconds of the sampling, the sample gas was immediately introduced into a NOX detecting tube to determine the NOX amount on the basis of a change in color.

### Determination the amount THC emitted

It was confirmed visually and on a basis of the rotation number in an oscilloscope that the combustion reached a steady state. After 5 to 10 seconds, sampling of the exhaust gas was started, using a sampling bag. After ten seconds of the sampling, the sample gas was immediately introduced into a THC detecting tube to determine the THC amount on the basis of a change in color.

### 1. The Examples and the Comparative Examples where the fuel oil (1) was used

The properties of the hydrocarbon oils used in the Examples and the Comparative Examples are as shown in Tables 1 and 2.

### Examples 1-1 to 1-16

The base materials were used in the amounts (% by volume) shown in Tables 3 and 4 to produce the fuel oils shown in Tables 3 and 4. As described above, each of the fuel oils obtained was used in the internal-combustion engine system shown in Fig. 1 to determine the amounts of NOX and TCH emitted. The results are as shown in Tables 3 and 4.

### Comparative Example 1-1

The internal-combustion engine 10 was operated in the same manner as in Example 1-1, except that the gas fed to the combustion chamber comprised air only, both when the engine was started and when the operation of the engine reached a steady state. The concentrations of NOX and THC emitted were 200ppm and 300ppm, respectively.

### Comparative Example 1-2

The internal-combustion engine 10 was operated in the same manner as in Example 1-1, except that the gas fed to the combustion chamber at the start of the engine comprised 70% by volume of oxygen, 29% by volume of nitrogen and 0. 9% by volume of argon. Backfire occurred and the combustion was unstable. Therefore, the operation was stopped.

**[Table 1]**

| | | Desulfurized light naphtha | Desulfurized heavy naphtha | Desulfurized full range naphtha | GTL naphtha | Isomerate gasoline | Alkylates | Sulfolane raffinate | LPG |
|---|---|---|---|---|---|---|---|---|---|
| Sulfur (ppm by mass) | | 0.1 | 0.2 | 0.3 | 0.1 | 0.3 | 8 | 0.4 | 2 |
| Hydrocarbons (% by volume) | Hydrocarbons having 4 carbon atoms | 5.4 | 0.0 | 0.2 | 2.1 | 2.0 | 8.2 | 0.6 | 98.0 |
| | Hydrocarbons having 5 carbon atoms | 42.0 | 0.3 | 9.3 | 12.0 | 44.0 | 3.2 | 4.5 | 0.2 |
| | Hydrocarbons having 6 carbon atoms | 49.0 | 7.0 | 22.7 | 20.1 | 53.6 | 3.0 | 46.2 | 0.0 |
| | Hydrocarbons having 7 carbon atoms | 3.5 | 28.3 | 22.3 | 21.1 | 0.3 | 2.7 | 47.6 | 0.0 |
| | Hydrocarbons having 8 carbon atoms | 0.1 | 33.1 | 24.4 | 23.6 | 0.1 | 79.8 | 1.1 | 0.0 |
| | Hydrocarbons having 5 to 8 carbon atoms | 94.6 | 68.7 | 78.7 | 76.8 | 98.0 | 88.7 | 99.4 | 0.0 |
| | Hydrocarbons having 9 carbon atoms | 0.0 | 26.4 | 18.6 | 17.7 | 0.0 | 1.1 | 0.0 | 0.0 |
| | Hydrocarbons having 10 or more carbon atoms | 0.0 | 4.9 | 2.5 | 3.5 | 0.0 | 2.0 | 0.0 | 0.0 |
| Composition (% by volume) | Saturated hydrocarbons | 99.0 | 92.0 | 94.4 | 100.0 | 99.9 | 99.8 | 96.0 | 99.4 |
| | Olefins | 0.0 | 0.0 | 0.8 | 0.0 | 0.1 | 0.1 | 3.9 | 0.6 |
| | Aromatic hydrocarbons | 1.0 | 8.0 | 4.8 | 0.0 | 0.0 | 0.1 | 0.1 | 0.0 |
| | Paraffins/saturated hydrocarbons (*1) | 92.6 | 79.5 | 87.3 | 100.0 | 98.4 | 100.0 | 98.2 | 100.0 |
| | IP/paraffins (*2) | 37.0 | 49.0 | 45.0 | 53.5 | 83.5 | 91.5 | 72.5 | 34.6 |
| | | | | | | | | | |
| Distillation characteristics (degrees C) | IBP | 27.5 | 71.0 | 42.0 | 31.0 | 32.0 | 31.0 | 65.5 | -- |
| | T10 | 40.5 | 92.5 | 60.0 | 48.0 | 40.0 | 71.5 | 72.0 | -- |
| | T30 | 47.5 | 100.5 | 75.5 | 69.5 | 43.5 | 99.0 | 75.5 | -- |
| | T50 | 51.5 | 111.5 | 92.0 | 92.5 | 46.5 | 105.5 | 79.5 | -- |
| | T70 | 57.5 | 127.0 | 111.5 | 113.5 | 51.5 | 110.0 | 86.0 | -- |
| | T90 | 68.5 | 135.5 | 135.5 | 129.5 | 58.5 | 122.0 | 98.5 | -- |
| | EP | 78.5 | 157.5 | 153.0 | 150.5 | 70.0 | 180.0 | 126.0 | -- |
| RVP(Reid vapor pressure)(kPa) | | 95.6 | 19.5 | 58.6 | 72.0 | 91.0 | 58.5 | 29.9 | 338.0 |
| RON(Research Octane Number) | | 71.8 | 54.0 | 60.1 | 51.5 | 82.0 | 95.5 | 56.9 | 95.0 |

| | | | | | | | | | |
|---|---|---|---|---|---|---|---|---|---|
| (*1) % by volume of paraffins in saturated hydrocarbons (*2) % by volume of IP (branched paraffins) in paraffins | | | | | | | | | |

**[Table 2]**

| | | Cracked gasoline | Desulfurized cracked gasoline | Light cracked gasoline | Heavy cracked gasoline | Reformed gasoline | Light reformed gasoline | Middle and heavy reformed gasoline | Heavy reformed gasoline |
|---|---|---|---|---|---|---|---|---|---|
| Sulfur(ppm by mass) | | 83 | 1 | 7 | 110 | 0.5 | 0.2 | 0.4 | 0.3 |
| Hydrocarbons (% by volume) | Hydrocarbons having 4 carbon atoms | 7.0 | 7.3 | 13.2 | 0.0 | 1.2 | 18.0 | 0.0 | 0.0 |
| | Hydrocarbons having 5 carbon atoms | 25.2 | 25.4 | 47.2 | 0.1 | 9.2 | 50.0 | 0.0 | 0.0 |
| | Hydrocarbons having 6 carbon atoms | 20.2 | 20.4 | 29.3 | 7.3 | 18.9 | 31.8 | 0.5 | 0.0 |
| | Hydrocarbons having 7 carbon atoms | 18.2 | 18.3 | 8.8 | 23.5 | 28.3 | 0.2 | 36.2 | 0.0 |
| | Hydrocarbons having 8 carbon atoms | 13.7 | 13.5 | 1.4 | 22.7 | 32.2 | 0.0 | 48.0 | 0.0 |
| | Hydrocarbons having 5 to 8 carbon atoms | 77.3 | 77.6 | 86.7 | 53.6 | 88.6 | 82.0 | 84.7 | 0.0 |
| | Hydrocarbons having 9 carbon atoms | 11.4 | 11.1 | 0.0 | 21.3 | 8.9 | 0.0 | 13.3 | 68.3 |
| | Hydrocarbons having 10 or more carbon atoms | 4.3 | 4.0 | 0.0 | 25.1 | 1.3 | 0.0 | 2.0 | 31.7 |
| Composition (% by volume) | Saturated hydrocarbons | 47.1 | 53.3 | 45.1 | 33.0 | 21.9 | 97.3 | 4.6 | 0.3 |
| | Olefins | 39.5 | 33.4 | 53.6 | 39.2 | 1.7 | 1.7 | 0.0 | 0.0 |
| | Aromatic hydrocarbons | 13.4 | 13.3 | 1.3 | 27.9 | 76.3 | 1.1 | 95.4 | 99.7 |
| | Paraffins/saturated hydrocarbons (*1) | 85.6 | 88.3 | 93.5 | 76.4 | 98.1 | 99.0 | 98.4 | 97.4 |
| | IP/paraffins (*2) | 85.6 | 88.3 | 86.0 | 88.5 | 63.8 | 62.9 | 48.4 | 86.8 |
| | | | | | | | | | |
| Distillation characteristics (degrees C) | IBP | 32.0 | 31.0 | 24.5 | 108.0 | 30.5 | 22.0 | 103.0 | 163.0 |
| | T10 | 51.5 | 51.0 | 32.5 | 119.5 | 59.5 | 26.0 | 117.5 | 164.5 |
| | T30 | 77.0 | 75.0 | 39.0 | 126.5 | 91.5 | 33.0 | 123.0 | 165.5 |
| | T50 | 112.0 | 108.0 | 45.0 | 135.0 | 110.5 | 40.5 | 129.5 | 167.5 |
| | T70 | 150.5 | 145.0 | 53.5 | 148.0 | 126.5 | 47.5 | 137.5 | 172.0 |
| | T90 | 189.0 | 182.0 | 69.5 | 167.0 | 145.5 | 54.0 | 151.0 | 190.5 |
| | EP | 216.5 | 199.0 | 93.5 | 183.5 | 175.5 | 66.0 | 191.5 | 270.0 |
| RVP(Reid vapor pressure)(kPa) | | 62.5 | 64.0 | 115.0 | 12.0 | 62.0 | 128.0 | 7.0 | 0.1 |
| RON (Research Octane Number) | | 92.3 | 90.0 | 95.5 | 88.0 | 101.5 | 78.4 | 111.5 | 118.0 |

| | | | | | | | | | |
|---|---|---|---|---|---|---|---|---|---|
| (*1) % by volume of paraffins in saturated hydrocarbons (*2) % by volume of IP (branched paraffins) in paraffins | | | | | | | | | |

**[Table 3]**

| | | Ex. 1-1 | Ex. 1-2 | Ex. 1-3 | Ex. 1-4 | Ex. 1-5 | Ex. 1-6 | Ex. 1-7 | Ex. 1-8 |
|---|---|---|---|---|---|---|---|---|---|
| Base material (% by volume) | Desulfurized light naphtha | | | 100 | | | | | 50 |
| | Desulfurized heavy naphtha | | | | 100 | | | | |
| | Desulfurized full range naphtha | 100 | | | | | | | |
| | GTL naphtha | | 100 | | | | | | |
| | Isomerate gasoline | | | | | 100 | | | 50 |
| | Alkylates | | | | | | 100 | | |
| | Sulfolane raffinate | | | | | | | 100 | |
| | LPG | | | | | | | | |
| | Cracked gasoline | | | | | | | | |
| | Desulfurized cracked gasoline | | | | | | | | |
| | Light cracked gasoline | | | | | | | | |
| | Heavy cracked gasoline | | | | | | | | |
| | Reformed gasoline | | | | | | | | |
| | Light reformed gasoline | | | | | | | | |
| | Middle and heavy reformed gasoline | | | | | | | | |
| | Heavy reformed gasoline | | | | | | | | |
| | ETBE | | | | | | | | |
| | | | | | | | | | |
| Sulfur(ppm by mass) | | 0.3 | 0.1 | 0.1 | 0.2 | 0.3 | 8 | 0.4 | 0.2 |
| Hydrocarbons (% by volume) | C4 | 0.2 | 2.1 | 5.4 | 0.0 | 2.0 | 8.2 | 0.6 | 3.7 |
| | C5 | 9.3 | 12.0 | 42.0 | 0.3 | 44.0 | 3.2 | 4.5 | 43.0 |
| | C6 | 22.7 | 20.1 | 49.0 | 7.0 | 53.6 | 3.0 | 46.2 | 51.8 |
| | C7 | 22.3 | 21.1 | 3.5 | 28.3 | 0.3 | 2.7 | 47.6 | 1.9 |
| | C8 | 24.4 | 23.6 | 0.1 | 33.1 | 0.1 | 79.8 | 1.1 | 0.1 |
| | C5+C6+C7+C8 | 78.7 | 76.8 | 94.6 | 68.7 | 98.0 | 88.7 | 99.4 | 96.8 |
| | C9 | 18.6 | 17.7 | 0.0 | 26.4 | 0.0 | 1.1 | 0.0 | 0.0 |
| | C10 or more | 2.5 | 3.5 | 0.0 | 4.9 | 0.0 | 2.0 | 0.0 | 0.0 |
| Composition (% by volume) | Saturated hydrocarbons | 94.4 | 100.0 | 99. 0 | 92.0 | 99.9 | 99.8 | 96.0 | 99.4 |
| | Olefins | 0.8 | 0.0 | 0.0 | 0.0 | 0.1 | 0.1 | 3.9 | 0.1 |
| | Aromatic hydrocarbons | 4.8 | 0.0 | 1.0 | 8.0 | 0.0 | 0.1 | 0.1 | 0.5 |
| | Paraffins/saturated hydrocarbons (*1) | 87.3 | 100.0 | 92.6 | 79.5 | 98.4 | 100.0 | 98.2 | 95.5 |
| | IP/paraffins (*2) | 45.0 | 53.5 | 37.0 | 49.0 | 83.5 | 91.5 | 72.5 | 55.7 |
| | | | | | | | | | |
| Distillation characteristics (degree C) | IBP | 42.0 | 31.0 | 27.5 | 71.0 | 32.0 | 31.0 | 65.5 | 27.6 |
| | T10 | 60.0 | 48.0 | 40.5 | 92.5 | 40.0 | 71.5 | 72.0 | 40.5 |
| | T30 | 75.5 | 69.5 | 47.5 | 100.5 | 43.5 | 99.0 | 75.5 | 45.0 |
| | T50 | 92.0 | 92.5 | 51.5 | 111.5 | 46.5 | 105.5 | 79.5 | 48.5 |
| | T70 | 111.5 | 113.5 | 57.5 | 127.0 | 51.5 | 110.0 | 86.0 | 54.5 |
| | T90 | 135.5 | 129.5 | 68.5 | 135.5 | 58.5 | 122.0 | 98.5 | 69.0 |
| | EP | 153.0 | 150.5 | 78.5 | 157.5 | 70.0 | 180.0 | 126.0 | 78.5 |
| Operation results | NOX (ppm) | 20 | 21 | 18 | 20 | 19 | 22 | 21 | 17 |
| | THC(ppm) | 190 | 189 | 190 | 195 | 190 | 195 | 195 | 190 |

| | | | | | | | | | |
|---|---|---|---|---|---|---|---|---|---|
| (*1) % by volume of paraffins in saturated hydrocarbons (*2) % by volume of IP (branched paraffins) in paraffins | | | | | | | | | |

**[Table 4]**

| | | | | Ex. 1-9 | Ex. 1-10 | Ex. 1-11 | Ex. 1-12 | Ex. 1-13 | Ex. 1-14 | Ex. 1-15 | Ex. 1-16 | Comp.Ex. 1-1 |
|---|---|---|---|---|---|---|---|---|---|---|---|---|
| Base material (% by volume) | | Desulfurized light naphtha | | | | | | | | | | |
| | | Desulfurized heavy naphtha | | 50 | 50 | 47.5 | | | | | | |
| | | Desulfurized full range naphtha | | | | | | | | | | 100 |
| | | GTL naphtha | | | | | | | | | | |
| | | Isomerate gasoline | | 50 | 20 | 19 | 50 | | 95 | | | |
| | | Alkylates | | | 30 | 28.5 | 50 | 70 | | 50 | 50 | |
| | | Sulfolane raffinate | | | | | | | | | | |
| | | LPG | | | | | | | | | | |
| | | Cracked gasoline | | | | | | | | | | |
| | | Desulfurized cracked gasoline | | | | | | | | | | |
| | | Light cracked gasoline | | | | | | 30 | | 50 | | |
| | | Heavy cracked gasoline | | | | | | | | | 50 | |
| | | Reformed gasoline | | | | | | | | | | |
| | | Light reformed gasoline | | | | | | | | | | |
| | | Middle and heavy reformed gasoline | | | | 5 | | | | | | |
| | | Heavy reformed gasoline | | | | | | | | | | |
| | | ETBE | | | | | | | 5 | | | |
| | | | | | | | | | | | | |
| Sulfur (ppm by mass) | | | | 0.3 | 3.5 | 3.3 | 4.4 | 7.5 | 0.3 | 7.5 | 59 | 0.3 |
| Hydro carbon s (% by volume ) | Hydrocarbons having 4 carbon atoms | | | 1.0 | 2.9 | 2.9 | 5.1 | 9.7 | 2.0 | 10.7 | 4.1 | 0.2 |
| | Hydrocarbons having 5 carbon atoms | | | 22.1 | 9.9 | 9.9 | 23.6 | 16.4 | 44.0 | 25.2 | 1.6 | 9.3 |
| | Hydrocarbons having 6 carbon atoms | | | 30.3 | 15.1 | 15.3 | 28.3 | 10.9 | 53.6 | 16.2 | 5.2 | 22.7 |
| | Hydrocarbons having 7 carbon atoms | | | 14.3 | 15.0 | 15.7 | 1.5 | 4.5 | 0.3 | 5.7 | 13.1 | 22.3 |
| | Hydrocarbons having 8 carbon atoms | | | 16.6 | 40.5 | 40.1 | 39.9 | 56.3 | 0.1 | 40.6 | 51.3 | 24.4 |
| | Hydrocarbons having 5 to 8 carbon atoms | | | 83.3 | 80.5 | 81.0 | 93.3 | 88.1 | 98.0 | 87.7 | 71.2 | 78.7 |
| | Hydrocarbons having 9 carbon atoms | | | 13.2 | 13.5 | 13.3 | 0.6 | 0.8 | 0.0 | 0.6 | 11.2 | 18.6 |
| | Hydrocarbons having 10 or more carbon atoms | | | 2.5 | 3.1 | 2.8 | 1.0 | 1.4 | 0.0 | 1.0 | 13.5 | 2.5 |
| Composition (% by volume) | | | Saturated hydrocarbons | 95.9 | 95.9 | 92.2 | 99.9 | 77.3 | 99.9 | 72.5 | 66.4 | 94.4 |
| | | | Olefins | 0.1 | 0.1 | 0.2 | 0.1 | 9.9 | 0.1 | 26.8 | 19.6 | 0.8 |
| | | | Aromatic hydrocarbons | 4.0 | 4.0 | 7.6 | 0.0 | 11.8 | 0.0 | 0.7 | 14.0 | 4.8 |
| | | | Paraffins/saturated hydrocarbons (*1) | 88.8 | 89.4 | 89.8 | 99.2 | 98.1 | 98.4 | 97.5 | 88.2 | 87.3 |
| | | | IP/paraffins (*2) | 64.0 | 68.7 | 68.4 | 87.0 | 89.9 | 83.5 | 89.0 | 90.0 | 45.0 |
| | | | | | | | | | | | | |
| Distillation characteristics (degree C) | | | IBP | 32.0 | 32.0 | 30.5 | 31.0 | 24.5 | 32.0 | 24.0 | 31.0 | 42.0 |
| | | | T10 | 40.0 | 45.0 | 46.0 | 41.5 | 35.0 | 40.0 | 36.5 | 85.5 | 60.0 |
| | | | T30 | 46.5 | 74.5 | 78.0 | 47.0 | 46.0 | 44.0 | 48.0 | 108.0 | 75.5 |
| | | | T50 | 71.0 | 90.0 | 95.0 | 62.5 | 67.0 | 46.5 | 72.5 | 121.0 | 92.0 |
| | | | T70 | 100. 5 | 115.5 | 116.0 | 100.0 | 102.5 | 51.5 | 102.5 | 136.5 | 111.5 |
| | | | T90 | 140. 5 | 140.0 | 145.0 | 135.0 | 131.5 | 59.0 | 116.0 | 164.0 | 135.5 |
| | | | EP | 158. 0 | 180.0 | 180.5 | 180.0 | 180.5 | 70.0 | 180.0 | 184.0 | 153.0 |
| Operation results | | | NOX (ppm) | 19 | 19 | 20 | 20 | 19 | 19 | 17 | 17 | 200 |
| | | | THC (ppm) | 190 | 189 | 195 | 195 | 190 | 187 | 195 | 195 | 300 |

| | | | | | | | | | | | | |
|---|---|---|---|---|---|---|---|---|---|---|---|---|
| (*1) % by volume of paraffins in saturated hydrocarbons (*2) % by volume of IP (branched paraffins) in paraffins | | | | | | | | | | | | |

### 2. The Examples and the Comparative Examples where the fuel oil (2) was used

The properties of the hydrocarbon oils used in the Examples and the Comparative Examples are as shown in Tables 1 and 2.

### Examples 2-1 to 2-9

The base materials were used in the amounts (% by volume) shown in Table 5 to produce the fuel oils shown in Table 5. As described above, each of the fuel oils obtained was used in the internal-combustion engine system shown in Fig. 1 to determine the amounts of NOX and TCH emitted. The results are as shown in Table 5.

### Comparative Example 2-1

The internal-combustion engine 10 was operated in the same manner as in Example 2-4, except that the gas fed to the combustion chamber comprised air only, both when the engine was started and when the operation of the engine reached a steady state. The concentrations of NOX and THC emitted were 150ppm and 285ppm, respectively.

### Comparative Example 2-2

The internal-combustion engine 10 was operated in the same manner as in Example 2-4, except that the gas fed to the combustion chamber at the start of the engine comprised 70% by volume of oxygen, 29% by volume of nitrogen and 0.9% by volume of argon. Backfire occurred and the combustion was unstable. Therefore, the operation was stopped.

**[Table 5]**

| | | | Ex. 2-1 | Ex. 2-2 | Ex. 2-3 | Ex. 2-4 | Ex. 2-5 | Ex. 2-6 | Ex. 2-7 | Ex. 2-8 | Ex. 2-9 |
|---|---|---|---|---|---|---|---|---|---|---|---|
| Base material (% by volume) | | Desulfurized light naphtha | | | | | | | | | |
| | | Desulfurized heavy naphtha | | | | | | | | | 20 |
| | | Desulfurized full range naphtha | 100 | | | | | | | | |
| | | GTL naphtha | | 100 | | | | | | | |
| | | Isomerate gasoline | | | 9 | | 11 | 9 | | 7.2 | |
| | | Alkylates | | | 11 | 20 | 9 | 11 | 16 | 8.8 | 50 |
| | | Sulfolane raffinate | | | 12 | | 10 | 12 | | 9.6 | 30 |
| | | LPG | | | | 1 | 2 | | 0.8 | | |
| | | Cracked gasoline | | | 40 | | | | | 32 | |
| | | Desulfurized cracked gasoline | | | | | 45 | 40 | | | |
| | | Light cracked gasoline | | | | 40 | | | 32 | | |
| | | Heavy cracked gasoline | | | 5 | | | 5 | | 4 | |
| | | Reformed gasoline | | | 17 | | 17 | 17 | | 13.6 | |
| | | Light reformed gasoline | | | 2 | 4 | 3 | 2 | 3.2 | 1.6 | |
| | | Middle and heavy reformed gasoline | | | 4 | 35 | 3 | 4 | 28 | 3.2 | |
| | | Heavy reformed gasoline | | | | | | | | | |
| | | Isooctene | | | | | | | 20 | 20 | |
| | | | | | | | | | | | |
| Sulfur (ppm by mass) | | | 0.3 | 0.1 | 39.5 | 4.6 | 1.4 | 7.0 | 3.7 | 5.6 | 2.6 |
| Hydro carbons (% by volume) | Hydrocarbons having 4 carbon atoms | | 0.2 | 2.1 | 4.5 | 8.6 | 7.0 | 4.6 | 7.2 | 3.8 | 3.5 |
| | Hydrocarbons having 5 carbon atoms | | 9.3 | 12.0 | 17.5 | 21.5 | 20.1 | 17.6 | 17.9 | 14.7 | 23.0 |
| | Hydrocarbons having 6 carbon atoms | | 22.7 | 20.1 | 23.0 | 13.8 | 24.1 | 23.1 | 11.5 | 19.3 | 29.1 |
| | Hydrocarbons having 7 carbon atoms | | 22.3 | 21.1 | 20.8 | 16.7 | 19.2 | 20.8 | 13.9 | 17.3 | 6.6 |
| | Hydrocarbons having 8 carbon atoms | | 24.4 | 23.6 | 22.9 | 32.2 | 20.3 | 22.8 | 43.5 | 35.7 | 30.6 |
| | Hydrocarbons having 5 to 8 carbon atoms | | 78.7 | 76.8 | 84.2 | 84.2 | 83.7 | 84.3 | 86.8 | 87.0 | 89.3 |
| | Hydrocarbons having 9 carbon atoms | | 18.6 | 17.7 | 7.8 | 4.9 | 7.0 | 7.7 | 4.1 | 6.4 | 5.6 |
| | Hydrocarbons having 10 or more carbon atoms | | 2.5 | 3.5 | 3.5 | 2.3 | 2.3 | 3.4 | 2.0 | 2.8 | 1.6 |
| Composition (% by volume) | | Saturated hydrocarbons | 94.4 | 100.0 | 57.8 | 44.5 | 62.3 | 60.3 | 37.1 | 50.3 | 98.3 |
| | | Olefins | 0.8 | 0.0 | 18.6 | 21.5 | 24.9 | 16.1 | 34.6 | 30.0 | 0.1 |
| | | Aromatic hydrocarbons | 4.8 | 0.0 | 23.6 | 34.0 | 21.8 | 23.6 | 28.3 | 19.7 | 1.6 |
| | | Paraffins/saturated hydrocarbons(*1) | 87.3 | 100.0 | 92.3 | 96.8 | 94.0 | 93.4 | 96.6 | 93.0 | 95.1 |
| | | IP/ paraffins(*2) | 45.0 | 53.5 | 79.0 | 72.5 | 79.3 | 80.1 | 72.4 | 80.5 | 79.0 |
| Distillation characteristics (degree C) | | IBP | 42.0 | 31.0 | 31.0 | 23.0 | 22.5 | 30.5 | 23.0 | 30.5 | 31.0 |
| | | T10 | 60.0 | 48.0 | 58.5 | 46.0 | 50.5 | 59.0 | 50.0 | 60.0 | 43.0 |
| | | T30 | 75.5 | 69.5 | 86.0 | 87.0 | 90.0 | 87.0 | 90.0 | 91.0 | 67.0 |
| | | T50 | 92.0 | 92.5 | 115.0 | 110.0 | 112.5 | 115.5 | 115.0 | 116.5 | 100.5 |
| | | T70 | 111.5 | 113.5 | 145.5 | 126.5 | 137.5 | 146.0 | 130.5 | 147.0 | 128.0 |
| | | T90 | 135.5 | 129.5 | 171.0 | 141.0 | 160.5 | 171.0 | 142.0 | 172.0 | 140.5 |
| | | EP | 153.0 | 150.5 | 192.5 | 192.5 | 192.0 | 192.0 | 192.5 | 192.0 | 158.0 |
| RVP(kPa) | | | 58.6 | 72.0 | 57.2 | 68.7 | 68.4 | 57.2 | 70.0 | 57.2 | 66.9 |
| RON | | | 71.8 | 54.0 | 96.1 | 100.5 | 89.5 | 96.0 | 100.0 | 96.5 | 80.5 |
| Operation results | | NOX (ppm) | 20 | 21 | 20 | 19 | 20 | 20 | 19 | 19 | 19 |
| | | THC (ppm) | 190 | 189 | 150 | 160 | 165 | 152 | 160 | 150 | 180 |

| | | | | | | | | | | | |
|---|---|---|---|---|---|---|---|---|---|---|---|
| (*1) % by volume of paraffins in saturated hydrocarbons (*2) % by volume of IP (branched paraffins) in paraffin | | | | | | | | | | | |

### 3. The Examples and the Comparative Examples where the fuel oil (3) was used

The properties of the hydrocarbon oils used in the Examples and the Comparative Examples are as shown in Tables 1 and 2.

### Examples 3-1 to 3-7

The base materials were used in the (% by volume) shown in Table 6 to produce the fuel oils shown in Table 6. As described above, each of the fuel oils obtained was used in the internal-combustion engine system shown in Fig. 1 to determine the amounts of NOX and TCH emitted. The results are as shown in Table 6.

### Comparative Example 3-1

The internal-combustion engine 10 was operated in the same manner as in Example 3-1, except that the gas fed to the combustion chamber comprised air only, both when the engine was started and when the operation of the engine reached a steady state. The concentrations of NOX and THC emitted were 350ppm and 500ppm, respectively.

### Comparative Example 3-2

The internal-combustion engine 10 was operated in the same manner as in Example 3-1, except that the gas fed to the combustion chamber at the start of the engine comprised 70% by volume of oxygen, 29% by volume of nitrogen and 0.9% by volume of argon. Backfire occurred and the combustion was unstable. Therefore, the operation was stopped.

**[Table 6]**

| | | Ex. 3-1 | Ex. 3-2 | Ex. 3-3 | Ex. 3-4 | Ex. 3-5 | Ex. 3-6 | Ex. 3-7 |
|---|---|---|---|---|---|---|---|---|
| Base material (% by volume) | Desulfurized light naphtha | | | | 3 | | 15 | |
| | Desulfurized heavy naphtha | | | | | | | 10 |
| | Desulfurized full range naphtha | | | | | | | |
| | GTL naphtha | | | | | | | |
| | Isomerate gasoline | | 18 | 10 | | | | |
| | Alkylates | 18 | | 8 | | | 15 | 20 |
| | Sulfolane raffinate | | | | | 8 | | |
| | LPG | 2 | 2 | 2 | 2 | 2 | | |
| | Cracked gasoline | 2 | 2 | 3 | | | | |
| | Desulfurized cracked gasoline | 28 | 28 | 17 | | | | |
| | Light cracked gasoline | | | | 25 | 30 | | |
| | Heavy cracked gasoline | | | | 5 | 20 | | |
| | Reformed gasoline | | | | | | | |
| | Light reformed gasoline | | | | | | | |
| | Middle and heavy reformed gasoline | 50 | 50 | 60 | 50 | 30 | 30 | 30 |
| | Heavy reformed gasoline | | | | 15 | 10 | 40 | 40 |
| | | | | | | | | |
| Sulfur(ppm by mass) | | 3.0 | 2.2 | 3.6 | 7.5 | 24.3 | 1.5 | 4.0 |
| Hydrocarbons (% by volume) | Hydrocarbons having 4 carbon atoms | 5.6 | 4.5 | 4.3 | 5.4 | 6.0 | 2.0 | 1.6 |
| | Hydrocarbons having 5 carbon atoms | 8.2 | 15.5 | 9.7 | 13.1 | 14.5 | 6.8 | 0.7 |
| | Hydrocarbons having 6 carbon atoms | 6.9 | 16.0 | 10.0 | 9.4 | 14.1 | 8.0 | 1.5 |
| | Hydrocarbons having 7 carbon atoms | 24.1 | 23.6 | 25.6 | 21.5 | 22.0 | 11.8 | 14.2 |
| | Hydrocarbons having 8 carbon atoms | 42.4 | 28.0 | 37.9 | 25.5 | 19.4 | 26.4 | 33.7 |
| | Hydrocarbons having 5 to 8 carbon atoms | 81.6 | 83.1 | 83.2 | 69.5 | 70.0 | 53.0 | 50.1 |
| | Hydrocarbons having 9 carbon atoms | 10.2 | 10.0 | 10.3 | 18.0 | 15.2 | 31.4 | 34.0 |
| | Hydrocarbons having 10 or more carbon atoms | 2.6 | 2.4 | 2.2 | 7.1 | 8.8 | 13.6 | 14.3 |
| Composition (% by volume) | Saturated hydrocarbons | 38.1 | 38.1 | 33.2 | 20.2 | 31.2 | 31.3 | 30.7 |
| | Olefins | 10.2 | 10.2 | 6.9 | 15.4 | 24.2 | 0.0 | 0.0 |
| | Aromatic hydrocarbon | 51.7 | 51.7 | 59.9 | 64.4 | 44.6 | 68.7 | 69.3 |
| | Paraffins/saturated hydrocarbons (*1) | 95.6 | 95.3 | 95.4 | 95.8 | 92.4 | 97.4 | 96.4 |
| | IP/paraffins (*2) | 67.8 | 66.4 | 63.0 | 65.0 | 73.2 | 68.5 | 72.4 |
| | C7 Aromatics/aromatic hydrocarbons (*3) | 17.5 | 17.6 | 20.5 | 18.0 | 11.2 | 10.5 | 10.5 |
| | C9 Aromatics/aromatic hydrocarbons (*4) | 4.9 | 5.0 | 6.1 | 8.5 | 9.5 | 30.5 | 30.6 |
| Distillation characteristics (degree C) | IBP | 29.0 | 29.5 | 29.0 | 26.0 | 24.0 | 27.0 | 32.0 |
| | T10 | 60.5 | 55.5 | 57.5 | 69.0 | 64.0 | 63.5 | 100.5 |
| | T30 | 85.5 | 95.5 | 97.0 | 99.0 | 98.0 | 105.0 | 134.5 |
| | T50 | 110.5 | 117.5 | 115.5 | 126.0 | 121.0 | 130.5 | 150.5 |
| | T70 | 160.5 | 155.5 | 164.5 | 180.0 | 174.5 | 185.0 | 175.5 |
| | T90 | 190.5 | 191.0 | 195.0 | 215.0 | 200.5 | 218.5 | 199.5 |
| | EP | 218.0 | 218.5 | 217.0 | 270.0 | 272.0 | 271.0 | 270.0 |
| RVP(kPa) | | 40.1 | 45.8 | 37.5 | 42.5 | 48.2 | 25.3 | 15.8 |
| RON | | 102.5 | 100.0 | 102.7 | 106.0 | 98.0 | 105.8 | 105.5 |
| Operation | NOX (ppm) | 40 | 42 | 40 | 45 | 40 | 38 | 41 |
| results | THC (ppm) | 200 | 205 | 202 | 195 | 210 | 190 | 210 |

| | | | | | | | | |
|---|---|---|---|---|---|---|---|---|
| (*1) % by volume paraffins in saturated hydrocarbons (*2) % by volume of IP (branched paraffins) in paraffins (*3) % by volume of C7 aromatic hydrocarbons in aromatic hydrocarbons (*4) % by volume of C9 aromatic hydrocarbons in aromatic hydrocarbons | | | | | | | | |

### 4. The Examples and the Comparative Examples where the fuel oil (4) was used

The properties of the hydrocarbon oils used in the Examples and the Comparative Examples are as shown in Tables 7 and 8.

### Examples 4-1 to 4-8

The base materials were used in the amounts (% by volume) shown in Table 9 to produce the fuel oils shown in Table 9. As described above, each of the fuel oils obtained was used in the internal-combustion engine system shown in Fig. 1 to determine the amounts of NOX and TCH emitted. The results are as shown in Table 9.

### Comparative Example 4-1

The internal-combustion engine 10 was operated in the same manner as in Example 4-1, except that the gas fed to the combustion chamber comprised air only, both when the engine was started and when the operation of the engine reached a steady state. The concentrations of NOX and THC emitted were 200ppm and 400ppm, respectively.

### Comparative Example 4-2

The internal-combustion engine 10 was operated in the same manner as in Example 4-1, except that the gas fed to the combustion chamber at the start of the engine comprised 70% by volume of oxygen, 29% by volume of nitrogen and 0.9% by volume of argon. Backfire occurred and the combustion was unstable. Therefore, the operation was stopped.

**[Table 7]**

| | | Desulfurized kerosene | Hydrodesulfurized kerosene | GTL kerosene | Hydro-cr acked kerosene | Kerosene obtained by directly desulfurizing heavy oil | Catalytically cracked kerosene |
|---|---|---|---|---|---|---|---|
| Sulfur | (ppm by mass) | 4 | <1 | <1 | 1 | 14 | 80 |
| Composition (%by volume) | Saturated hydrocarbons | 88.9 | 93.7 | 100.0 | 82.1 | 67.6 | 35.7 |
| | Aromatic hydrocarbons | 11.1 | 6.3 | 0.0 | 17.9 | 32.4 | 60.0 |
| | Olefinc hydrocarbons | 0.0 | 0.0 | 0.0 | 0.0 | 0.0 | 4.3 |
| | Naphthenic hydrocarbons | 29.8 | 27.2 | 0.0 | 40.1 | 37.2 | 21.3 |
| Distillation characteristics | IBP(degree C) | 151.5 | 163.5 | 152.0 | 153.0 | 170.0 | 163.0 |
| | T10(degree C) | 170.5 | 173.5 | 172.5 | 168.0 | 187.0 | 186.0 |
| | T30(degree C) | 185.0 | 186.0 | 183.0 | 183.0 | 211.0 | 213.0 |
| | T50 (degree C) | 201.0 | 199.5 | 200.0 | 199.5 | 225.5 | 236.0 |
| | T70(degree C) | 221.5 | 213.5 | 218.0 | 220.5 | 254.0 | 260.5 |
| | T90(degree C) | 247.5 | 233.5 | 244.0 | 246.0 | 280.0 | 291.5 |
| | T95(degree C) | 249.0 | 241.0 | 246.0 | 258.0 | 285.5 | 300.0 |
| | EP(degree C) | 263.0 | 249.5 | 257.0 | 269.0 | 304.5 | 327.0 |
| Smoke point | (mm) | 27.0 | 30.0 | 32.0 | 21.0 | 16.0 | 10.5 |

**[Table 8]**

| | | Heavy cracked gasoline | Heavy reformed gasoline |
|---|---|---|---|
| Sulfur | (ppm by mass) | 110 | 0.3 |
| Composition (%by volume) | Saturated hydrocarbons | 33.0 | 0.3 |
| | Aromatic hydrocarbons | 27.9 | 99.7 |
| | Olefinc hydrocarbons | 39.2 | 0.0 |
| | Naphthenic hydrocarbons | 7.8 | 0.0 |
| Distillation characteristics | IBP (degree C) | 108.0 | 163.0 |
| | T10 (degree C) | 119.5 | 164.5 |
| | T30 (degree C) | 126.5 | 165.5 |
| | T50 (degree C) | 135.0 | 167.5 |
| | T70 (degree C) | 148.0 | 172.0 |
| | T90 (degree C) | 167.0 | 190.5 |
| | T95 (degree C) | 175.5 | 235.5 |
| | EP (degree C) | 183.5 | 270.0 |
| Smoke point | (mm) | --- | --- |

**[Table 9]**

| | | Ex. 4-1 | Ex. 4-2 | Ex. 4-3 | Ex. 4-4 | Ex. 4-5 | Ex. 4-6 | Ex. 4-7 | Ex. 4-8 |
|---|---|---|---|---|---|---|---|---|---|
| Base material (% by volume) | Desulfurized kerosene | 100 | | | | | | | |
| | Hydrodesulfurized kerosene | | 100 | | | | | | |
| | GTL kerosene | | | 100 | | | | 80 | 80 |
| | Hydrocracked kerosene | | | | 100 | | | | |
| | Kerosene obtained by directly desulfurizing heavy oil | | | | | 100 | | | |
| | Catalytically cracked kerosene | | | | | | 100 | | |
| | Heavy cracked gasoline | | | | | | | | 20 |
| | Heavy reformed gasoline | | | | | | | 20 | |
| | | | | | | | | | |
| Sulfur | (ppm by mass) | 4 | <1 | <1 | 1 | 14 | 80 | <1 | 22 |
| Composition (%by volume) | Saturated hydrocarbons | 88.9 | 93.7 | 100.0 | 82.1 | 67.6 | 35.7 | 80.1 | 86.6 |
| | Aromatic hydrocarbons | 11.1 | 6.3 | 0.0 | 17.9 | 32.4 | 60.0 | 19.9 | 5. 6 |
| | Olefinc hydrocarbons | 0.0 | 0.0 | 0.0 | 0.0 | 0.0 | 4.3 | 0.0 | 7.8 |
| | Naphthenic hydrocarbons | 29.8 | 27.2 | 0.0 | 40.1 | 37.2 | 21.3 | 0.0 | 1.4 |
| Distillation characteristics | IBP (degree C) | 151.5 | 163.5 | 152.0 | 153.0 | 170.0 | 163.0 | 152.0 | 107.5 |
| | T10 (degree C) | 170.5 | 173.5 | 172.5 | 168.0 | 187.0 | 186.0 | 171.5 | 135.5 |
| | T30 (degree C) | 185.0 | 186.0 | 183.0 | 183.0 | 211.0 | 213.0 | 182.5 | 175.5 |
| | T50 (degree C) | 201.0 | 199.5 | 200.0 | 199.5 | 225.5 | 236.0 | 195.5 | 190.0 |
| | T70 (degree C) | 221.5 | 213.5 | 218.0 | 220.5 | 254.0 | 260.5 | 210.0 | 204.5 |
| | T90 (degree C) | 247.5 | 233.5 | 244.0 | 246.0 | 280.0 | 291.5 | 235.0 | 215.0 |
| | T95 (degree C) | 249.0 | 241.0 | 246.0 | 258.0 | 285.5 | 300.0 | 247.5 | 225.0 |
| | EP (degree C) | 263.0 | 249.5 | 257.0 | 269.0 | 304.5 | 327.0 | 270.0 | 258.0 |
| Smoke point | (mm) | 27.0 | 30.0 | 32.0 | 21.0 | 16.0 | 10.5 | 26.5 | 27.0 |
| Operation results | NOX (ppm) | 20 | 22 | 18 | 21 | 25 | 20 | 20 | 19 |
| | THC (ppm) | 150 | 130 | 110 | 120 | 175 | 190 | 160 | 150 |

### 5. The Examples and the Comparative Examples where the fuel oil (5) was used

The properties of the hydrocarbon oils used in the Examples and the Comparative Examples are as shown in Tables 1o to 12.

### Examples 5-1 to 5-15

The base materials were used in the amounts (% by volume) shown in Tables 13 and 14 to produce the fuel oils shown in Tables 13 and 14. As described above, each of the fuel oils obtained was used in the internal-combustion engine system shown in Fig. 1 to determine the amounts of NOX and TCH emitted. The results are as shown in Tables 13 and 14.

### Comparative Example 5-1

The internal-combustion engine 10 was operated in the same manner as in Example 5-1, except that the gas fed to the combustion chamber comprised air only, both when the engine was started and when the operation of the engine reached a steady state. The concentrations of NOX and THC emitted were 150ppm and 250ppm, respectively.

### Comparative Example 5-2

The internal-combustion engine 10 was operated in the same manner as in Example 5-1, except that the gas fed to the combustion chamber at the start of the engine comprised 70% by volume of oxygen, 29% by volume of nitrogen and 0. 9% by volume of argon. Backfire occurred and the combustion was unstable. Therefore, the operation was stopped.

**[Table 10]**

| Gas oil base materials | | | | | | | | |
|---|---|---|---|---|---|---|---|---|
| | | Desulfurized gas oil | Deep desulfurized gas oil | Heavy gas oil | GTL gas oil | Hydro-c racked gas oil | Gas oil obtained by directly desulfurizing heavy oil | Catalytically cracked gas oil |
| Sulfur | (ppm by mass) | 65 | 8 | 1560 | <1 | <1 | 150 | 800 |
| Composition (%by volume) | Saturated hydrocarbons | 72.7 | 74.5 | 67.6 | 100.0 | 92.0 | 53.7 | 34.9 |
| | Aromatic hydrocarbons | 27.2 | 25.4 | 32.4 | 0.0 | 8.0 | 46.3 | 60.0 |
| | Monocyclic hydrocarbons | 19.7 | 18.9 | 22.4 | 0.0 | 6.0 | 41.1 | 29.5 |
| | Bicyclic hydrocarbons | 5.3 | 4.5 | 4.0 | 0.0 | 1.2 | 4.2 | 20.5 |
| | Tri- or more cyclic hydrocarbons | 2.2 | 2.0 | 6.0 | 0.0 | 0.8 | 1.0 | 10.0 |
| | Olefinc hydrocarbons | 0.1 | 0.1 | 0.0 | 0.0 | 0.0 | 0.0 | 5.1 |
| Distillation characteristics | IBP (degree C) | 243.5 | 239.5 | 254.0 | 211.0 | 259.5 | 181.0 | 163.0 |
| | T10 (degree C) | 270.5 | 265.0 | 340.0 | 250.0 | 292.0 | 216.0 | 185.0 |
| | T50 (degree C) | 301.0 | 294.5 | 386.0 | 293.0 | 316.0 | 295.0 | 235.0 |
| | T90 (degree C) | 326.5 | 320.5 | 423.0 | 325.0 | 347.0 | 349.0 | 335.0 |
| | T95 (degree C) | 334.0 | 329.5 | 441.0 | 331.0 | 353.0 | 359.0 | 352.0 |
| | EP (degree C) | 342.0 | 340.0 | 460.0 | 337.0 | 358.0 | 368.0 | 366.0 |
| Cetane index | | 59.5 | 60.5 | 59.3 | 93.0 | 71.0 | 51.0 | 33.2 |
| Cetane number | | 58.0 | 58.0 | 55.2 | 84.0 | 63.1 | 45.8 | 21.0 |

**[Table 11]**

| Kerosene base materials | | | | | |
|---|---|---|---|---|---|
| | | Desulfurized kerosene | GTL kerosene | Hydrocracked kerosene | Catalytically cracked kerosene |
| Sulfur | (ppm by mass) | 4 | <1 | 1 | 80 |
| Composition (%by volume) | Saturated hydrocarbons | 88.9 | 100.0 | 82.1 | 35.7 |
| | Aromatic hydrocarbons | 11.1 | 0.0 | 17.9 | 60.0 |
| | Monocyclic hydrocarbons | 10.7 | 0.0 | 16.7 | 48.0 |
| | Bicyclic hydrocarbons | 0.4 | 0.0 | 1.0 | 10.5 |
| | Tri- or more cyclic hydrocarbons | 0.0 | 0.0 | 0.2 | 1.5 |
| | Olefinc hydrocarbons | 0.0 | 0.0 | 0.0 | 4.3 |
| Distillation characteristics | IBP (degree C) | 151.5 | 152.0 | 153.0 | 163.0 |
| | T10 (degree C) | 170.5 | 172.5 | 168.0 | 186.0 |
| | T50 (degree C) | 201.0 | 200.0 | 199.5 | 236.0 |
| | T90 (degree C) | 247.5 | 244.0 | 246.0 | 291.5 |
| | T95 (degree C) | 249.0 | 246.0 | 258.0 | 300.0 |
| | EP (degree C) | 263.0 | 257.0 | 269.0 | 327.0 |
| Cetane index | | 49.3 | 45.0 | 42.0 | 15.0 |
| Cetane number | | 45.0 | 44.0 | 41.0 | 14.0 |

**[Table 12]**

| Gasoline base materials | | |
|---|---|---|
| | | Heavy reformed gasoline |
| Sulfur | (ppm by mass) | 0.3 |
| Composition (%by volume) | Saturated hydrocarbons | 0.3 |
| | Aromatic hydrocarbons | 99.7 |
| | Monocyclic hydrocarbons | 85.5 |
| | Bicyclic hydrocarbons | 13.0 |
| | Tri- or more cyclic hydrocarbons | 1.2 |
| | Olefinc hydrocarbons | 0.0 |
| Distillation characteristics | IBP (degree C) | 163.0 |
| | T10 (degree C) | 164.5 |
| | T50 (degree C) | 167.5 |
| | T90 (degree C) | 190.5 |
| | T95 (degree C) | 230.0 |
| | EP (degree C) | 270.0 |

**[Table 13]**

| | | Ex. 5-1 | Ex. 5-2 | Ex. 5-3 | Ex. 5-4 | Ex. 5-5 | Ex. 5-6 | Ex. 5-7 | Ex. 5-8 | Ex. 5-9 | Ex. 5-10 |
|---|---|---|---|---|---|---|---|---|---|---|---|
| Base material (% by volume) | Desulfurized gas oil | 100 | | | | | | | 30 | 60 | 30 |
| | Deep desulfurized gas oil | | 100 | | | | | | | | |
| | Heavy gas oil | | | 100 | | | | | | | |
| | GTL gas oil | | | | 100 | | | | | | |
| | Hydrocracked gas oil | | | | | 100 | | | 30 | | |
| | Gas oil obtained by directly desulfurizing heavy oil | | | | | | 100 | | | | |
| | Catallytically cracked gas oil | | | | | | | 100 | | 5 | |
| | Desulfurized kerosene | | | | | | | | 40 | 35 | 70 |
| | GTL kerosene | | | | | | | | | | |
| | Hydrocracked kerosene | | | | | | | | | | |
| | Catalytically cracked kerosene | | | | | | | | | | |
| | Heavy reformed gasoline | | | | | | | | | | |
| | | | | | | | | | | | |
| Sulfur | (ppm by mass) | 65 | 8 | 1560 | <1 | <1 | 150 | 800 | 21 | 29 | 22 |
| Composition (%by volume) | Saturated hydrocarbons | 72.7 | 74.5 | 67.6 | 100.0 | 92.0 | 53.7 | 34.9 | 85.0 | 77.4 | 84.0 |
| | Aromatic hydrocarbons | 27.2 | 25.4 | 32.4 | 0.0 | 8.0 | 46.3 | 60.0 | 15.0 | 22.6 | 15.9 |
| | Monocyclic hydrocarbons | 19.7 | 18.9 | 22.4 | 0.0 | 6.0 | 41.1 | 29.5 | 12.0 | 17.6 | 13.4 |
| | Bicyclic hydrocarbons | 5.3 | 4.5 | 4.0 | 0.0 | 1.2 | 4.2 | 20.5 | 2.1 | 3.5 | 1.9 |
| | Tri- or more cyclic hydrocarbons | 2.2 | 2.0 | 6.0 | 0.0 | 0.8 | 1.0 | 10.0 | 0.9 | 1.5 | 0.6 |
| | Olefinc hydrocarbons | 0.1 | 0.1 | 0.0 | 0.0 | 0.0 | 0.0 | 5.1 | 0.0 | 0.0 | 0.1 |
| Distillation characteristics | IBP (degree C) | 243.5 | 239.5 | 254.0 | 211.0 | 259.5 | 181.0 | 163.0 | 150.0 | 151.0 | 150.5 |
| | T10 (degree C) | 270.5 | 265.0 | 340.0 | 250.0 | 292.0 | 216.0 | 185.0 | 185.5 | 187.5 | 174.5 |
| | T50 (degree C) | 301.0 | 294.5 | 386.0 | 293.0 | 316.0 | 295.0 | 235.0 | 281.0 | 250.0 | 228.0 |
| | T90 (degree C) | 326.5 | 320.5 | 423.0 | 325.0 | 347.0 | 349.0 | 335.0 | 335.0 | 325.5 | 309.0 |
| | T95 (degree C) | 334.0 | 329.5 | 441.0 | 331.0 | 353.0 | 359.0 | 352.0 | 345.5 | 334.0 | 320.5 |
| | EP (degree C) | 342.0 | 340.0 | 460.0 | 337.0 | 358.0 | 368.0 | 366.0 | 370.0 | 371.0 | 343.5 |
| Cetane index | | 59.5 | 60.5 | 59.3 | 93.0 | 71.0 | 51.0 | 33.2 | 58.9 | 55.5 | 52.4 |
| Cetane number | | 58.0 | 58.0 | 55.2 | 84.0 | 63.1 | 45.8 | 21.0 | 54.3 | 52.8 | 48.9 |
| Operation results | NOX (ppm) | 40 | 39 | 50 | 30 | 40 | 38 | 35 | 35 | 36 | 36 |
| | THC (ppm) | 300 | 310 | 400 | 250 | 310 | 325 | 400 | 300 | 310 | 310 |

**[Table 14]**

| | | Ex. 5-11 | Ex. 5-12 | Ex. 5-13 | Ex. 5-14 | Ex. 5-15 |
|---|---|---|---|---|---|---|
| Base material (% by volume) | Desulfurized gas oil | 60 | 70 | | | |
| | Deep desulfurized gas oil | | | | | |
| | Heavy gas oil | | | | | |
| | GTL gas oil | | | 70 | | 80 |
| | Hydrocracked gas oil | | | | | |
| | Gas oil obtained by directly desulfurizing heavy oil | 10 | | | | |
| | Catallyticaly cracked gas oil | | | | 70 | |
| | Desulfurized kerosene | 30 | 30 | | | |
| | GTL kerosene | | | 30 | | |
| | Hydrocracked kerosene | | | | | |
| | Catalytically cracked kerosene | | | | 30 | |
| | Heavy reformed gasoline | | | | | 20 |
| | | | | | | |
| Sulfur | (ppm by mass) | 55 | 47 | <1 | 584 | <1 |
| Composition (%by volume) | Saturated hydrocarbons | 75.7 | 77.6 | 100.0 | 35.1 | 80.1 |
| | Aromatic hydrocarbons | 24.3 | 22.3 | 0.0 | 60.0 | 19.9 |
| | Monocyclic hydrocarbons | 19.1 | 17.0 | 0.0 | 35.1 | 17.1 |
| | Bicyclic hydrocarbons | 3.7 | 3.8 | 0.0 | 17.5 | 2.6 |
| | Tri- or more cyclic hydrocarbons | 1.5 | 1.5 | 0.0 | 7.4 | 0.2 |
| | Olefinc hydrocarbons | 0.0 | 0.1 | 0.0 | 4.9 | 0.0 |
| Distillation characteristics | IBP (degree C) | 151.0 | 150.5 | 152.0 | 163.0 | 162.0 |
| | T10 (degree C) | 190.5 | 195.0 | 188.0 | 185.5 | 168.0 |
| | T50 (degree C) | 285.0 | 285.0 | 271.5 | 235.5 | 279.0 |
| | T90 (degree C) | 328.0 | 321.0 | 320.0 | 330.0 | 314.5 |
| | T95 (degree C) | 336.5 | 330.0 | 328.0 | 349.0 | 322.0 |
| | EP (degree C) | 370.5 | 345.0 | 340.0 | 368.0 | 340.5 |
| Cetane index | | 55.6 | 56.4 | 78.6 | 27.7 | 76.4 |
| Cetane number | | 52.9 | 54.1 | 72.0 | 18.9 | 69.2 |
| Operation results | NOX (ppm) | 35 | 36 | 35 | 35 | 30 |
| | THC (ppm) | 300 | 310 | 325 | 320 | 290 |

### 6. The Examples and the Comparative Examples where the fuel oil (6) was used

The properties of the gasoline base materials, the gas oil base materials and the kerosene base materials used in the Examples and the Comparative Examples are as shown in Tables 1 and 2, Table 10 and Table 11, respectively.

### Examples 6-1 to 6-15

The base materials shown in Tables 1, 2, 10 and 11 were used in the amounts (% by volume) shown in Tables 15 and 16 to produce the fuel oils shown in Tables 15 and 16. As described above, each of the fuel oils obtained was used in the internal-combustion engine system shown in Fig. 1 to determine the amounts of NOX and TCH emitted. The results are as shown in Tables 15 and 16.

### Comparative Example 6-1

The internal-combustion engine 10 was operated in the same manner as in Example 6-2, except that the gas fed to the combustion chamber comprised air only, both when the engine was started and when the operation of the engine reached a steady state. The concentrations of NOX and THC emitted were 500ppm and 2500ppm, respectively.

### Comparative Example 6-2

The internal-combustion engine 10 was operated in the same manner as in Example 6-2, except that the gas fed to the combustion chamber at the start of the engine comprised 70% by volume of oxygen, 29% by volume of nitrogen and 0.9% by volume of argon. Backfire occurred and the combustion was unstable. Therefore, the operation was stopped.

**[Table 15]**

| | | Ex. 6-1 | Ex. 6-2 | Ex. 6-3 | Ex. 6-4 | Ex. 6-5 | Ex. 6-6 | Ex. 6-7 | Ex. 6-8 |
|---|---|---|---|---|---|---|---|---|---|
| Base material (% by volume) | Desulfurized light naphtha | 27 | 21 | 27 | 27 | 27 | 27 | 27 | 27 |
| | Desulfurized heavy naphtha | | | | | | | | |
| | Desulfurized full range naphtha | | | | | | | | |
| | GTL naphtha | | | | | | | | |
| | Isomerate gasoline | | | | | | | | |
| | Alkylates | 22 | 14 | 22 | 22 | 22 | 22 | 22 | 22 |
| | Sulfolane raffinate | | | | | | | | |
| | LPG | 5 | 7 | 5 | 5 | 5 | 5 | 5 | 5 |
| | Cracked gasoline | 18 | 14 | 18 | 18 | 18 | 18 | 18 | 18 |
| | Desulfurized cracked gasoline | | | | | | | | |
| | Light cracked gasoline | | | | | | | | |
| | Heavy cracked gasoline | | | | | | | | |
| | Reformed gasoline | | | | | | | | |
| | Light reformed gasoline | 9 | 7 | 9 | 9 | 9 | 9 | 9 | 9 |
| | Middle and heavy reformed gasoline | | | | | | | | |
| | Heavy reformed gasoline | 9 | 7 | 9 | 9 | 9 | 9 | 9 | 9 |
| | Desulfurized kerosene | | | | | | | | |
| | GTL kerosene | | | | | | | | |
| | Hydrocracked kerosene | | | | | | | | |
| | Catalytically cracked kerosene | | | | | | | | |
| | Desulfurized gas oil | 10 | 30 | | | | | | |
| | Deep desulfurized gas oil | | | 10 | | | | | |
| | Heavy gas oil | | | | 10 | | | | |
| | GTL gas oil | | | | | 10 | | | |
| | Hydrocracked gas oil | | | | | | 10 | | |
| | Gas oil obtained by directly desulfurizing heavy oil | | | | | | | 10 | |
| | Catalytically cracked gas oil | | | | | | | | 10 |
| | | | | | | | | | |
| Sulfur | (ppm by mass) | 23.2 | 32.4 | 17.5 | 173 | 16.7 | 16.7 | 31.7 | 96.7 |
| Composition (%by volume) | Saturated hydrocarbons | 78.2 | 77.0 | 78.4 | 77.7 | 80.9 | 80.1 | 76.3 | 74.4 |
| | Olefins | 7.3 | 5.7 | 7.3 | 7.3 | 7.3 | 7.3 | 7.3 | 7.8 |
| | Aromatic hydrocarbons | 14.5 | 17.3 | 14.3 | 15.0 | 11.8 | 12,6 | 16.4 | 17.8 |
| | Monocyclic hydrocarbons | 13.1 | 12.5 | 13.1 | 13.4 | 11.2 | 11.8 | 15.3 | 14.1 |
| | Bicyclic hydrocarbons | 1.2 | 3.5 | 1.0 | 1.0 | 0.6 | 0.7 | 1.0 | 2.7 |
| | Tri- or more cyclic hydrocarbons | 0.2 | 1.3 | 0.2 | 0.6 | 0.0 | 0.1 | 0.1 | 1.0 |
| Distillation characteristics (degree C) | IBP | 25.0 | 25.0 | 24.5 | 24.5 | 25.0 | 24.5 | 24.5 | 24.5 |
| | T10 | 39.0 | 40.5 | 39.0 | 39.5 | 39.0 | 39.5 | 39.0 | 39.0 |
| | T50 | 152. 5 | 230. 5 | 151. 5 | 152. 0 | 150. 5 | 151. 5 | 153. 5 | 154. 0 |
| | T90 | 253. 5 | 313. 5 | 252. 0 | 260. 0 | 233. 0 | 261. 5 | 254. 5 | 235. 0 |
| | T95 | 301. 0 | 333. 0 | 294. 5 | 385. 5 | 294. 0 | 316. 0 | 297. 0 | 268. 0 |
| | EP | 342. 0 | 342. 5 | 340. 5 | 460. 0 | 338. 0 | 358. 0 | 369. 0 | 365. 0 |
| Operation results | NOX (ppm) | 20 | 60 | 25 | 20 | 20 | 22 | 25 | 25 |
| | THC (ppm) | 200 | 450 | 180 | 210 | 180 | 190 | 220 | 250 |

**[Table 16]**

| | | Ex. 6-9 | Ex. 6-10 | Ex. 6-11 | Ex. 6-12 | Ex. 6-13 | Ex. 6-14 | Ex. 6-15 |
|---|---|---|---|---|---|---|---|---|
| Base material (% by volume) | Desulfurized light naphtha | 27 | 27 | 27 | 27 | | | |
| | Desulfurized heavy naphtha | | | | | | | |
| | Desulfurized full range naphtha | | | | | | | |
| | GTL naphtha | | | | | | | |
| | Isomerate gasoline | | | | | | | |
| | Alkylates | 22 | 22 | 22 | 22 | 27 | 27 | 27 |
| | Sulfolane raffinate | | | | | | | |
| | LPG | 5 | 5 | 5 | 5 | | | |
| | Cracked gasoline | 18 | 18 | 18 | 18 | | | |
| | Desulfurized cracked gasoline | | | | | 18 | 18 | 18 |
| | Light cracked gasoline | | | | | | | |
| | Heavy cracked gasoline | | | | | | | |
| | Reformed gasoline | | | | | | | |
| | Light reformed gasoline | 9 | 9 | 9 | 9 | 9 | 9 | 9 |
| | Middle and heavy reformed gasoline | | | | | | | |
| | Heavy reformed gasoline | 9 | 9 | 9 | 9 | 36 | 36 | 36 |
| | Desulfurized kerosene | 10 | | | | | 10 | 5 |
| | GTL kerosene | | 10 | | | | | |
| | Hydrocracked kerosene | | | 10 | | | | |
| | Catalytically cracked kerosene | | | | 10 | | | |
| | Desulfurized gas oil | | | | | 10 | | 5 |
| | Deep desulfurized gas oil | | | | | | | |
| | Heavy gas oil | | | | | | | |
| | GTL gas oil | | | | | | | |
| | Hydrocracked gas oil | | | | | | | |
| | Gas oil obtained by directly desulfurizing heavy oil | | | | | | | |
| | Catalytically cracked gas oil | | | | | | | |
| | | | | | | | | |
| Sulfur | (ppm by mass) | 17.1 | 16.7 | 16.8 | 24.7 | 9.1 | 3.0 | 3.9 |
| Composition (%by volume) | Saturated hydrocarbons | 79.8 | 80.4 | 79.1 | 74.5 | 52.7 | 54.3 | 53.5 |
| | Olefins | 7.3 | 7.3 | 7.3 | 7.8 | 6.2 | 6.2 | 6.2 |
| | Aromatic hydrocarbons | 12.9 | 11.8 | 13.6 | 17.7 | 41.3 | 39.7 | 40.5 |
| | Monocyclic hydrocarbons | 12.2 | 11.2 | 12.8 | 16.0 | 29.0 | 28.1 | 28.5 |
| | Bicyclic hydrocarbons | 0.7 | 0.6 | 1.2 | 1.5 | 8.3 | 7.8 | 8.1 |
| | Tri- or more cyclic hydrocarbons | 0.0 | 0.0 | 0.0 | 0.2 | 4.0 | 3.8 | 3.9 |
| Distillation characteristics (degree C) | IBP | 24.0 | 24.5 | 26.0 | 25.0 | 23.0 | 23.5 | 24.5 |
| | T10 | 39.5 | 39.5 | 39.5 | 39.0 | 48.0 | 49.0 | 48.5 |
| | T50 | 150. 5 | 151. 0 | 153. 0 | 154. 0 | 178. 5 | 170. 0 | 171. 0 |
| | T90 | 222. 0 | 224. 0 | 224. 0 | 231. 0 | 275. 0 | 210. 0 | 230. 0 |
| | T95 | 247. 0 | 245. 0 | 246. 5 | 261. 5 | 305. 0 | 227. 0 | 303. 0 |
| | EP | 271. | 270. 5 | 270. 0 | 327. 5 | 344. 0 | 271. 0 | 343. 0 |
| Operation results | NOX (ppm) | 20 | 22 | 15 | 21 | 22 | 22 | 19 |
| | THC (ppm) | 200 | 200 | 190 | 190 | 170 | 180 | 180 |

### 7. The Examples and the Comparative Examples where the fuel oil (7) was used

The properties of the hydrocarbon oils used in the Examples and the Comparative Examples are as shown in Tables 17 and 18.

### Examples 7-1 to 7-12

The base materials shown in Tables 17 and 18 were used in the amounts (% by volume) shown in Tables 19 and 20 to produce the fuel oils as shown in Tables 19 and 20. As described above, each of the fuel oils obtained was used in the internal-combustion engine system shown in Fig. 1 to determine the amounts of NOX and TCH emitted. The results are as shown in Tables 19 and 20.

### Comparative Example 7-1

The internal-combustion engine 10 was operated in the same manner as in Example 7-11, except that the gas fed to the combustion chamber comprised air only, both when the engine was started and when the operation of the engine reached a steady state. The concentrations of NOX and THC emitted were 140ppm and 400ppm, respectively.

### Comparative Example 7-2

The internal-combustion engine 10 was operated in the same manner as in Example 7-11, except that the gas fed to the combustion chamber at the start of the engine comprised 70% by volume of oxygen, 29% by volume of nitrogen and 0.9% by volume of argon. Backfire occurred and the combustion was unstable. Therefore, the operation was stopped.

**[Table 17]**

| Gasoline base materials | | | | | | | | |
|---|---|---|---|---|---|---|---|---|
| | | Light naphtha | Heavy naphtha | Full range naphtha | GTL naphtha | Isomerate gasoline | Akylates | Sulfolane raffinate |
| Sulfur | (ppm by mass) | 0.1 | 0.2 | 0.3 | <0.1 | 0.3 | 8 | 0.4 |
| Composition (%by volume) | Saturated hydrocarbons | 98.9 | 91.7 | 92.8 | 100.0 | 99.9 | 99.8 | 95.5 |
| | Olefins | 0.0 | 0.0 | 0.6 | 0.0 | 0.1 | 0.1 | 4.4 |
| | Aromatic hydrocarbons | 1.1 | 8.3 | 6.6 | 0.0 | 0.0 | 0.1 | 0.1 |
| | Monocyclic hydrocarbons | 1.1 | 8.3 | 6.6 | 0.0 | 0.0 | 0.1 | 0.1 |
| | Bicyclic hydrocarbons | 0.0 | 0.0 | 0.0 | 0.0 | 0.0 | 0.0 | 0.0 |
| | Tri- or more cyclic hydrocarbons | 0.0 | 0.0 | 0.0 | 0.0 | 0.0 | 0.0 | 0.0 |
| RON | | 72.0 | 53.0 | 63.3 | 52.0 | 82.0 | 95.2 | 57.0 |
| Distillation characteristics | IBP (degree C) | 28.0 | 71.5 | 35.0 | 31.5 | 32.0 | 31.0 | 66.0 |
| | T10 (degree C) | 40.5 | 92.5 | 55.0 | 47.5 | 40.5 | 71.0 | 72.5 |
| | T50 (degree C) | 51.5 | 100.5 | 91.5 | 92.5 | 46.5 | 105.5 | 79.5 |
| | T90 (degree C) | 68.5 | 111.5 | 134.5 | 129.5 | 58.5 | 122.5 | 98.5 |
| | EP (degree C) | 78.5 | 157.5 | 156.0 | 150.5 | 70.0 | 180.0 | 126.0 |

**[Table 18]**

| Kerosene/gas oil base materials | | | | |
|---|---|---|---|---|
| | | Catalytically cracked kerosene | Catalytically cracked gas oil | Aromatic-type solvent (S200, ex ExxonMobil Chemical Company, Inc.) |
| Sulfur | (ppm by mass) | 80 | 800 | <1 |
| Composition (%by volume) | Saturated hydrocarbons | 35.7 | 34.9 | 0.1 |
| | Aromatic hydrocarbons | 60.0 | 60.0 | 99.9 |
| | Monocyclic hydrocarbons | 48.0 | 29.5 | 19.9 |
| | Bicyclic hydrocarbons | 10.5 | 20.5 | 80.0 |
| | Tri- or more cyclic hydrocarbons | 1.5 | 10.0 | 0.0 |
| | Olefins | 4.3 | 5.1 | 0.0 |
| Distillation characteristics | IBP (degree C) | 163.0 | 163.0 | 234.5 |
| | T10 (degree C) | 186.0 | 185.0 | 240.5 |
| | T50 (degree C) | 236.0 | 235.0 | 249.0 |
| | T90 (degree C) | 291.5 | 335.0 | 271.5 |
| | T95 (degree C) | 300.0 | 352.0 | 280.5 |
| | EP (degree C) | 327.0 | 366.0 | 285.5 |
| Cetane index | | 15.0 | 33.2 | Unknown |
| Cetane number | | 14.0 | 21.0 | Unknown |

**[Table 19]**

| | | Ex. 7-1 | Ex. 7-2 | Ex. 7-3 | Ex. 7-4 | Ex. 7-5 | Ex. 7-6 | Ex. 7-7 | Ex. 7-8 |
|---|---|---|---|---|---|---|---|---|---|
| Base material (% by volume) | Light naphtha | 50 | 50 | 70 | | | | | |
| | Heavy naphtha | | | | 50 | | | | |
| | Full range naphtha | | | | | 50 | | | |
| | GTL naphtha | | | | | | 50 | | |
| | Isomerate gasoline | | | | | | | | 50 |
| | Akylate | | | | | | | 50 | |
| | Sulfolane raffinate | | | | | | | | |
| | Catalytically cracked kerosene | 50 | | | | | | | |
| | Catalytically cracked gas oil | | 50 | 30 | 50 | 50 | 50 | 50 | 50 |
| | Naphthalene (b.p.:218 degree C) | | | | | | | | |
| | Aromatic-type solvent | | | | | | | | |
| | | | | | | | | | |
| Sulfur | (ppm by mass) | 40 | 400 | 240 | 400 | 400 | 400 | 402 | 400 |
| Composition (%by volume) | Saturated hydrocarbons | 67.3 | 66.9 | 79.7 | 63.3 | 63.9 | 67.5 | 67.4 | 65.2 |
| | Olefins | 2.2 | 2.5 | 1.6 | 2.5 | 2.8 | 2.5 | 2.6 | 4.8 |
| | Aromatic hydrocarbons | 30.5 | 30.6 | 18.7 | 34.2 | 33.3 | 30.0 | 30.0 | 30.0 |
| | Monocyclic hydrocarbons | 24.5 | 15.3 | 9. 6 | 18.9 | 18.1 | 14.8 | 14.8 | 14.8 |
| | Bicyclic hydrocarbons | 5.3 | 10.3 | 6.2 | 10.3 | 10.2 | 10.2 | 10.2 | 10.2 |
| | Tri- or more cyclic hydrocarbons | 0.7 | 5.0 | 2.9 | 5.0 | 5.0 | 5.0 | 5.0 | 5.0 |
| Distillation characteristi cs (degree C) | IBP | 27.5 | 27.0 | 28.0 | 72.0 | 33.0 | 30.0 | 30.5 | 57.0 |
| | T10 | 45.5 | 46.0 | 42.5 | 95.0 | 67.5 | 60.5 | 82.0 | 75.5 |
| | T50 | 135.0 | 130.0 | 66.5 | 160.0 | 158.0 | 155.0 | 176.0 | 140.5 |
| | T90 | 257.0 | 305.0 | 214.5 | 302.5 | 303.5 | 310.0 | 305.5 | 307.5 |
| | T95 | 292.5 | 337.0 | 272.5 | 336.0 | 336.5 | 340.0 | 336.0 | 340.5 |
| | EP | 328.0 | 370.0 | 368.0 | 372.0 | 371.0 | 372.0 | 371.0 | 370.5 |
| Operation results | NOX (ppm) | 25 | 30 | 27 | 25 | 26 | 27 | 25 | 28 |
| | THC (ppm) | 130 | 150 | 150 | 140 | 150 | 145 | 140 | 145 |

**[Table 20]**

| | | Ex. 7-9 | Ex. 7-10 | Ex. 7-11 | Ex. 7-12 |
|---|---|---|---|---|---|
| Base material (% by volume) | Light naphtha | | 90 | 94 | 90 |
| | Heavy naphtha | | | | |
| | Full range naphtha | | | | |
| | GTL naphtha | | | | |
| | Isomerate gasoline | | | | |
| | Akylates | | | | |
| | Sulfolane raffinate | 50 | | | |
| | Catalytically cracked kerosene | | | | |
| | Catalytically cracked gas oil | 50 | | | |
| | Naphthalene (b.p.:218 degree C) | | 10 | | |
| | Aromatic-type solvent | | | 6 | 10 |
| | | | | | |
| Sulfur | (ppm by mass) | 40 | <0.1 | <0.1 | <0.1 |
| Composition (%by volume) | Saturated hydrocarbons | 67.3 | 89.0 | 93.0 | 89.0 |
| | Olefins | 2.2 | 0. 0 | 0.0 | 0.0 |
| | Aromatic hydrocarbons | 30.5 | 11.0 | 7.0 | 11.0 |
| | Monocyclic hydrocarbons | 24.5 | 1.1 | 1.1 | 3.0 |
| | Bicyclic hydrocarbons | 5.3 | 9.9 | 5.9 | 8.0 |
| | Tri- or more cyclic hydrocarbons | 0.7 | 0.0 | 0.0 | 0.0 |
| Distillation characteristics (degree C) | IBP | 27.5 | 27.0 | 27.5 | 27.0 |
| | T10 | 45.5 | 42.0 | 43.0 | 44.0 |
| | T50 | 135.0 | 60.5 | 62.5 | 63.5 |
| | T90 | 257.0 | 100.0 | 75.0 | 80.5 |
| | T95 | 292.5 | 215.0 | 242.0 | 250.0 |
| | EP | 328.0 | 220.0 | 286.0 | 290.0 |
| Operation results | NOX (ppm) | 23 | 22 | 20 | 25 |
| | THC (ppm) | 130 | 130 | 150 | 160 |

### EXPLANATION OF THE SYMBOLS IN THE DRAWING

1: Fuel tank
2: Air bomb
3: Oxygen bomb
4: Argon bomb
5: Preserver
6: Oxidation catalyst
7: Cooling tube
10: Internal-combustion engine

## Claims

1. A fuel oil for an internal-combustion engine comprising a combustion chamber which is adapted so that the fuel oil and gas comprising 65 % by volume or more of oxygen are subjectedto combustion in the combustion chamber, wherein the fuel oil meets at least one of the following requirements (1) to (7):
(1) the fuel oil comprises 60% by volume or more of a hydrocarbon oil, wherein an amount of saturated hydrocarbons is 30% by volume or more relative to the total volume of the hydrocarbon oil, an amount of olefinic hydrocarbons is 35% by volume or less relative to the total volume of the hydrocarbon oil and an amount of aromatic hydrocarbons is 50% by volume or less relative to the total volume of the hydrocarbon oil;
(2) the fuel oil comprises 60% by volume or more of a hydrocarbon oil, wherein an amount of saturated hydrocarbons is 30% by volume or more relative to the total volume of the hydrocarbon oil, an amount of olefinic hydrocarbons is 40% by volume or less relative to the total volume of the hydrocarbon oil and an amount of aromatic hydrocarbons is 50% by volume or less relative to the total volume of the hydrocarbon oil; and the fuel oil has an initial boiling point of 21 to 80 degrees C, a 10% by volume distillation temperature of 35 to 90 degrees C, a 90% by volume distillation temperature of 100 to 190 degrees C and a final boiling point of 130 to 230 degrees C;
(3) the fuel oil comprises 60% by volume or more of a hydrocarbon oil, wherein an amount of saturated hydrocarbons is 15% by volume or more relative to the total volume of the hydrocarbon oil, an amount of olefinic hydrocarbons is 35% by volume or less relative to the total volume of the hydrocarbon oil and an amount of aromatic hydrocarbons is 20 to 70% by volume relative to the total volume of the hydrocarbon oil; and the fuel oil has an initial boiling point of 24 to 80 degrees C, a 10% by volume distillation temperature of 40 to 90 degrees C, a 90% by volume distillation temperature of 170 to 220 degrees C and a final boiling point of 210 to 280 degrees C;
(4) the fuel oil comprises 60% by volume or more of a hydrocarbon oil, wherein an amount of saturated hydrocarbons is 30% by volume or more relative to the total volume of the hydrocarbon oil, an amount of olefinic hydrocarbons is 10% by volume or less relative to the total volume of the hydrocarbon oil, an amount of aromatic hydrocarbons is 65% by volume or less relative to the total volume of the hydrocarbon oil and an amount of naphthenic hydrocarbons is 45% by volume or less relative to the total volume of the hydrocarbon oil; and the fuel oil has an initial boiling point of 100 degrees C or higher;
(5) the fuel oil comprises 60% by volume or more of a hydrocarbon oil, wherein an amount of saturated hydrocarbons is 35% by volume or more relative to the total volume of the hydrocarbon oil, an amount of olefinic hydrocarbons is 10% by volume or less relative to the total volume of the hydrocarbon oil, an amount of aromatic hydrocarbons is 65% by volume or less relative to the total volume of the hydrocarbon oil, an amount of monocyclic aromatic hydrocarbons is 45% byvolume or less relative to the total volume of the hydrocarbon oil, an amount of bicyclic aromatic hydrocarbons is 25% by volume or less relative to the total volume of the hydrocarbon oil and an amount of tri- or more cyclic aromatic hydrocarbons is 20% by volume or less relative to the total volume of the hydrocarbon oil; and the fuel oil has an initial boiling point of 130 degrees C or higher;
(6) the fuel oil has an initial boiling point of 22 to 80 degrees C, a 10% by volume distillation temperature of 40 to 100 degrees C, a 90% by volume distillation temperature of 220 to 400 degrees C, a 95% by volume distillation temperature of 230 to 440 degrees C and a final boiling point of 260 to 470 degrees C; and
(7) the fuel oil comprises a gasoline base material having a Research Octane Number of 96.0 or less, and a base material comprising 10% by volume or more of polycyclic aromatic hydrocarbons.

2. The fuel oil according to claim 1, wherein the fuel oil meets the requirement (1), an amount of hydrocarbons having four carbon atoms is 15% by volume or less relative to the total volume of the hydrocarbon oil, a total amount of hydrocarbons having 5 to 8 carbon atoms is 50 to 100% by volume relative to the total volume of the hydrocarbon oil, and a total amount of hydrocarbons having 10 or more carbon atoms is 20% by volume or less relative to the total volume of the hydrocarbon oil.

3. The fuel oil according to claim 1 or 2, wherein the fuel oil meets the requirement (1) wherein the amount of the aromatic hydrocarbons is less than 15% by volume.

4. The fuel oil according to claim 1, wherein the fuel oil meets the requirement (2) and has a Research Octane Number of 54.0 or more.

5. The fuel oil according to claim 1 or 4, wherein the fuel oil meets the requirement (2) wherein the amount of the aromatic hydrocarbons is from 15% by volume to less than 40% by volume.

6. The fuel oil according to claim 1, wherein the fuel oil meets the requirement (3) and an amount of aromatic hydrocarbons having seven carbon atoms is 3 to 50% by volume relative to the total volume of the aromatic hydrocarbons.

7. The fuel oil according to claim 1 or 6, wherein the fuel oil meets the requirement (3) and an amount of aromatic hydrocarbons having nine carbon atoms is 3 to 50% by volume relative to the total volume of the aromatic hydrocarbons.

8. The fuel oil according to claim 1, 6 or 7, wherein the fuel oil meets the requirement (3) and has a Research Octane Number of 89.0 or more.

9. The fuel oil according to any one of claims 1 and 6 to 8, wherein the fuel oil meets the requirement (3) wherein the amount of the aromatic hydrocarbons is 40 to 70% by volume.

10. The fuel oil according to claim 1, wherein the fuel oil meets the requirement (4) and has an initial boiling point of 100 to 190 degrees C, a 10% by volume distillation temperature of 120 to 210 degrees C, a 95% by volume distillation temperature of 220 to 315 degrees C and a final boiling point of 230 to 330 degrees C.

11. The fuel oil according to claim 1 or 10, wherein the fuel oil meets the requirement (4) and has a sulfur content of 200ppm by mass or less.

12. The fuel oil according to claim 1, wherein the fuel oil meets the requirement (5) and has an initial boiling point of 130 to 250 degrees C, a 10% by volume distillation temperature of 140 to 290 degrees C, a 90% by volume distillation temperature of 240 to 430 degrees C, a 95% by volume distillation temperature of 250 to 450 degrees C and a final boiling point of 260 to 470 degrees C.

13. The fuel oil according to claim 1, wherein the fuel oil meets the requirement (6) and comprises a base material having a final boiling point of at least 70 degrees C and below 130 degrees C, and a base material having a final boiling point of 250 to 470 degrees C.

14. The fuel oil according to claim 1, wherein the fuel oil meets the requirement (6) and comprises a base material having a final boiling point of 130 to 220 degrees C, and a base material having a final boiling point of 250 to 470 degrees C.

15. The fuel oil according to any one of claims 1 to 5, wherein the fuel oil meets the requirement (1) or (2) and an amount of paraffinic hydrocarbons is 60% by volume or more relative to the total volume of the saturated hydrocarbons.

16. The fuel oil according to any one of claims 1 to 5 and 15, wherein the fuel oil meets the requirement (1) or (2) and an amount of branched paraffinic hydrocarbons is 35% by volume or more relative to the total volume of paraffinic hydrocarbons.

17. The fuel oil according to any one of claims 1, 4 to 9, 15 and 16, wherein the fuel oil meets the requirement (2) or (3) and has a Reid vapor pressure of 10 to 100kPa.

18. The fuel oil according to any one of claims 1, 4 to 9 and 15 to 17, wherein the fuel oil meets the requirement (2) or (3) and has a sulfur content of 100ppm by mass or less.

19. The fuel oil according to any one of claims 1 and 12 to 14, wherein the fuel oil meets the requirement (5), (6) or (7) and has a sulfur content of 2000ppm by mass or less.

20. The fuel oil according to any one of claims 1 to 19, comprising an oxygen-containing compound.

21. An internal-combustion engine comprising a combustion chamber which is adapted so that a fuel oil and gas comprising 65% by volume or more of oxygen are subjected to combustion in the combustion chamber, wherein the fuel oil is one according to any one of claims 1 to 20.

22. A diesel locomotive equipped with an internal-combustion engine comprising a combustion chamber which is adapted so that a fuel oil and gas comprising 65% by volume or more of oxygen are subjected to combustion in the combustion chamber, wherein the fuel oil is one according to any one of claims 1 to 20.
